(19) Europäisches Patentamt
European Patent Office
Office européen des brevets

(11) EP 4 503 833 A1

(12) **EUROPEAN PATENT APPLICATION**
published in accordance with Art. 153(4) EPC

(43) Date of publication:
**05.02.2025 Bulletin 2025/06**

(21) Application number: **23796824.3**

(22) Date of filing: **27.04.2023**

(51) International Patent Classification (IPC):
***H04W 74/08*** *(2024.01)* ***H04W 74/00*** *(2009.01)*

(52) Cooperative Patent Classification (CPC):
**H04W 74/00; H04W 74/08**

(86) International application number:
**PCT/KR2023/005755**

(87) International publication number:
**WO 2023/211182 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 KR 20220052981**

(71) Applicant: **Samsung Electronics Co., Ltd.**
**Suwon-si, Gyeonggi-do 16677 (KR)**

(72) Inventors:
- **CHOI, Kyungjun**
  **Suwon-si, Gyeonggi-do 16677 (KR)**
- **JANG, Youngrok**
  **Suwon-si, Gyeonggi-do 16677 (KR)**
- **SHIM, Jaeyeon**
  **Suwon-si, Gyeonggi-do 16677 (KR)**
- **JI, Hyoungju**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) METHOD AND DEVICE FOR RANDOM ACCESS IN WIRELESS COMMUNICATION SYSTEM

(57) The present disclosure relates to a communication technique and system for combining an IoT technology with a 5G communication system for supporting a higher data transfer rate than a 4G system. According to an embodiment of the present invention, a method of a terminal supporting subband non-overlapping full duplex (SBFD) in a wireless communication system may comprise the steps of: receiving time duplex division (TDD) resource configuration information and SBFD resource configuration information from a base station; determining respective indexes of first random access channel (RACH) occasions that are commonly valid in the TDD resource configuration information and the SBFD resource configuration information; and determining respective indexes of second RACH occasions that are invalid in the TDD resource configuration information and are valid in the SBFD resource configuration information.

FIG. 17

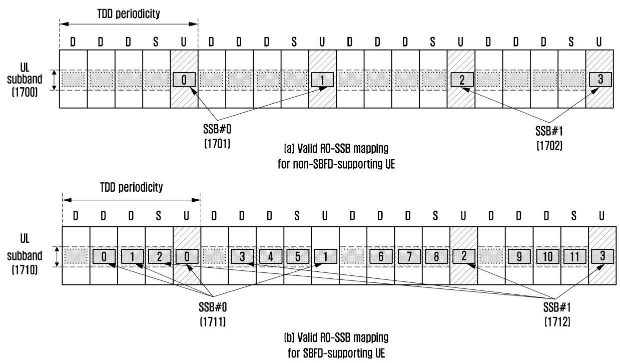




Processed by Luminess, 75001 PARIS (FR)

## Description

[Technical Field]

The disclosure relates to the operation of a terminal and a base station in a wireless communication system. Specifically, the disclosure relates to a method for a terminal to perform random access and a device capable of performing the same.

[Background Art]

5$^{th}$ generation (5G) mobile communication technologies define broad frequency bands such that high transmission rates and new services are possible, and can be implemented not only in "Sub 6 GHz" bands such as 3.5 GHz, but also in "Above 6 GHz" bands referred to as mmWave including 28 GHz and 39 GHz. In addition, it has been considered to implement 6$^{th}$ generation (6G) mobile communication technologies (referred to as Beyond 5G systems) in terahertz bands (e.g., 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra-Reliable Low-Latency Communications (URLLC), and massive Machine-Type Communications (mMTC), there has been ongoing standardization regarding beamforming and massive Multi-Input Multi-Output (MIMO) for mitigating radio-wave path loss and increasing radio-wave transmission distances in mmWave, supporting numerologies (e.g., operating multiple subcarrier spacings) for efficiently utilizing mmWave resources and dynamic operation of slot formats, initial access technologies for supporting multi-beam transmission and broadbands, definition and operation of Band-Width Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-Everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE power saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures. i.e., 2-step Random Access CHannel (RACH) for NR. There also has been ongoing standardization in system architecture/service regarding a 5G baseline architecture (e.g., service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

With the development of wireless communication systems and the aforementioned, various services have become available, and schemes for providing these services smoothly are required.

[Disclosure]

[Technical Problem]

The disclosed embodiments are intended to provide a device and method capable of effectively providing a service in a mobile communication system. Specifically, in the case where a subband non-overlapping full duplex (SBFD) terminal supporting an SBFD function performs random access, a method for determining the validity of a PRACH transmission time is provided.

The SBFD UE can be configured with an SBFD UL subband and can perform PRACH transmission for random access in the SBFD UL subband. Here, the SBFD UE can determine a valid RACH occasion in the SBFD UL subband for random access, and because a non-SBFD UE (legacy terminal) cannot use the SBFD UL subband, it can determine an RACH occasion overlapping with the SBFD UL subband as invalid. Therefore, the SBFD UE and the legacy terminal can have different valid RACH occasions.

The valid RACH occasion is connected to SSB. Through this information, a base station can transmit PDCCH that schedules Msg2 using downlink beamforming information of SSB corresponding to PRACH transmitted by the terminal, or PDSCH including Msg2. However, since the SBFD UE and the legacy terminal have different valid RACH occasions, the connected SSB may also be different. Therefore, the base station may be ambiguous about which SSB downlink beamforming information to use.

[Technical Solution]

The disclosure proposes a random access method in subband non-overlapping full duplex (SBFD).

According to an embodiment of the disclosure, a method of a terminal that supports a subband non-overlapping full duplex (SBFD) in a wireless communication system may include receiving time duplex division (TDD) resource configuration information and SBFD resource configuration information from a base station; determining respective indexes for first random access channel (RACH) occasions that are commonly valid in the TDD resource configuration information and the SBFD resource configuration information; and determining respective indexes for second RACH occasions that are not valid in the TDD resource configuration information and are valid in the SBFD resource configuration information, wherein the TDD resource configuration information may include format information of each slot, and the SBFD resource configuration information may include information about an uplink subband.

[Advantageous Effects]

The disclosed embodiments provide a device and method capable of effectively providing a service in a mobile communication system. Therefore, the accuracy of an SBFD UE in determining the validity of a PRACH transmission time is improved, and the SBFD UE can utilize a greater number of RACH occasions in the process of performing random access.

[Description of Drawings]

FIG. 1 is a diagram illustrating a basic structure of a time-frequency domain in a wireless communication system according to an embodiment of the disclosure.

FIG. 2 is a diagram illustrating structures of a frame, a subframe, and a slot in a wireless communication system according to an embodiment of the disclosure.

FIG. 3 is a diagram illustrating an example of the configuration of a bandwidth part (BWP) in a wireless communication system according to an embodiment of the disclosure.

FIG. 4 is a diagram illustrating an example of the configuration of a control resource set of a downlink control channel in a wireless communication system according to an embodiment of the disclosure.

FIG. 5 is a diagram illustrating a structure of a downlink control channel in a wireless communication system according to an embodiment of the disclosure.

FIG. 6 is a diagram illustrating a method in which a base station and a UE perform data transmission/reception by considering a downlink data channel and a rate matching resource according to an embodiment of the disclosure.
FIG. 7 is a diagram illustrating an example of frequency-domain resource assignment of a PDSCH in a wireless communication system according to an embodiment of the disclosure.
FIG. 8 is a diagram illustrating an example of time-domain resource allocation of a PDSCH in a wireless communication system according to an embodiment of the disclosure.
FIG. 9 is a diagram illustrating an example of time-domain resource allocation based on subcarrier spacings of a data channel and a control channel in a wireless communication system according to an embodiment of the disclosure.
FIG. 10 is a diagram illustrating radio protocol structures of a base station and a UE in a single cell, carrier aggregation, and dual connectivity situation in a wireless communication system according to an embodiment of the disclosure.
FIG. 11 is a diagram illustrating a random access procedure in an embodiment of the disclosure.
FIG. 12 is a diagram illustrating TDD configuration and SBFD configuration according to an embodiment of the disclosure.
FIG. 13 is a diagram illustrating a valid RACH occasion in TDD configuration and SBFD configuration according to an embodiment of the disclosure.
FIG. 14 is a diagram illustrating an index of a valid RACH occasion in TDD configuration and SBFD configuration according to an embodiment of the disclosure.
FIG. 15 is a diagram illustrating a method for determining an index of a valid RACH occasion in TDD configuration and SBFD configuration according to an embodiment of the disclosure.
FIG. 16 is a diagram illustrating a method for determining an index of a valid RACH occasion in TDD configuration and SBFD configuration according to an embodiment of the disclosure.
FIG. 17 is a diagram illustrating a method for determining an index of a valid RACH occasion in TDD configuration and SBFD configuration according to an embodiment of the disclosure.
FIG. 18 is a diagram illustrating a method for determining an index of a valid RACH occasion in TDD configuration and SBFD configuration according to an embodiment of the disclosure.
FIG. 19 is a diagram illustrating the structure of a UE in a wireless communication system according to an embodiment of the disclosure.
FIG. 20 is a diagram illustrating the structure of a base station in a wireless communication system according to an embodiment of the disclosure.

[Mode for Disclosure]

Hereinafter, embodiments of the disclosure will be described in detail with reference to the accompanying drawings.

In describing embodiments of the disclosure, descriptions of technical contents well-known in the art and not directly related to the disclosure will be omitted. This is to more clearly convey the subject matter of the disclosure without obscuring it by omitting unnecessary description.

For the same reason, some elements are exaggerated, omitted, or schematically illustrated in the accompanying drawings. In addition, the depicted size of each element does not completely reflect the actual size. In the drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided to inform those skilled in the art of the scope of the disclosure, and the disclosure is defined only by the scope of the appended claims. Throughout the description herein, the same or like reference numerals designate the same or like elements. Further, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the entire description herein.

In the following description, a base station is an entity that allocates resources to terminals, and may be at least one of a gNode B, an eNode B, a Node B, a base station (BS), a wireless access unit, a BS controller, and a node on a network. A terminal may include a UE, a mobile station (MS), a cellular phone, a smartphone, a computer, or a multimedia system capable of performing communication functions. A downlink (DL) refers to a radio link via which a base station transmits a signal to a terminal, and an uplink (UL) refers to a radio link via which a terminal transmits a signal to a base station. Further, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the 5G covers the existing LTE, LTE-A, or other similar services. In addition, based on determinations by those skilled in the art, the embodiments of the disclosure may also be applied to other communication systems through some modifications without significantly departing from the scope of the disclosure.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the term "unit" refers to a software element or a hardware element, such as a field programmable gate array (FPGA) or an application specific integrated circuit (ASIC), which performs a predetermined function. However, the term "unit" does not always have a meaning limited to software or hardware. A "unit" may be constructed either to be stored in an addressable storage medium or to execute one or more processors. Therefore, a "unit" includes, for example, software elements, object-oriented software elements, class elements or task elements, processes, functions, properties, procedures, subroutines, segments of a program code, drivers, firmware, micro-codes, circuits, data, database, data structures, tables, arrays, and variables. The functions provided by elements and units may be combined into those of a smaller number of elements and units or separated into those of a larger number of elements and units. In addition, the elements and units may be implemented to operate one or more central processing units (CPUs) within a device or a secure multimedia card. Also, in embodiments, a "unit" may include one or more processors.

Wireless communication systems have expanded beyond the original role of providing a voice-oriented service and have evolved into wideband wireless communication systems that provide a high-speed and high-quality packet data service according to, for example, communication standards such as High Speed Packet Access (HSPA), Long Term Evolution (LTE or Evolved Universal Terrestrial Radio Access (E-UTRA)), LTE-Advanced (LTE-A), or LTE-Pro in 3GPP, High Rate Packet Data (HRPD) or a Ultra Mobile Broadband (UMB) in 3GPP2, and 802.16e in IEEE.

As a typical example of the broadband wireless communication system, an LTE system employs an Orthogonal Frequency Division Multiplexing (OFDM) scheme in a downlink (DL) and employs a Single Carrier Frequency Division Multiple Access (SC-FDMA) scheme in an uplink (UL). The uplink indicates a radio link through which a User Equipment (UE) or a Mobile Station (MS) transmits data or control signals to a Base Station (BS or eNode B), and the downlink indicates a radio link through which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a communication system subsequent to LTE, must freely reflect various requirements of users, service providers, and the like, services satisfying various requirements must be supported. The services considered in the 5G communication system include enhanced Mobile Broadband (eMBB) communication, massive Machine Type Communication (mMTC), Ultra-Reliability Low-Latency Communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced Multi-Input Multi-Output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of things (IoT) in the 5G communication system. mMTC has requirements, such as support of connection of a large number of UEs in a cell, enhancement coverage of UEs, improved battery time, a reduction in the cost of a UE, and the like, in order to effectively provide the IoT. Since the IoT provides communication functions while being provided to various sensors and various devices, it must support a large number of UEs (e.g., 1,000,000 UEs/$km^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

Three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR Time-Frequency Resource]

Hereinafter, the frame structure of a 5G system will be described in more detail with reference to the drawings.

FIG. 1 is a diagram illustrating a basic structure of a time-frequency domain, which is a radio resource domain in which a data or control channel is transmitted in the 5G system.

In FIG. 1, the horizontal axis represents a time domain, and the vertical axis represents a frequency domain. A basic unit of resources in the time-frequency domain is a resource element (RE) 101. The resource element 101 may be defined as one OFDM symbol 102 in the time domain and one subcarrier 103 in the frequency domain. In the frequency domain, $N_{sc}^{RB}$ (for example, 12) consecutive REs may configure one resource block (RB) 104.

In FIG. 2, an example of structures of a frame 200, a subframe 201, and a slot 202 is shown. One frame 200 may be defined as 10 ms. One subframe 201 may be defined as 1 ms, and thus the one frame 200 may be composed of ten subframes 201 in total. One slot 202 or 203 may be defined as fourteen OFDM symbols (i.e., the number of symbols for one slot ($N_{\text{symb}}^{\text{slot}}=14$)). One subframe 201 may include one or multiple slots 202 and 203, and the number of slots 202 and 203 per one subframe 201 may differ according to a configuration value μ 204 or 205 for a subcarrier spacing. In the example of FIG. 2, cases in which the subcarrier spacing configuration value is μ=0 (204) and μ=1 (205) are illustrated. If μ=0 (204), one subframe 201 may be composed of one slot 202, and if μ=1 (205), one subframe 201 may be composed of two slots 203. That is, the number of slots per one subframe ($N_{\text{slot}}^{\text{subframe},\mu}$) may differ according to a subcarrier spacing configuration value μ, and accordingly, the number of slots per one frame ($N_{\text{slot}}^{\text{frame},\mu}$) may differ. According to each subcarrier spacing configuration μ, $N_{\text{slot}}^{\text{subframe},\mu}$ and $N_{\text{slot}}^{\text{frame},\mu}$ may be defined as in Table 1 below.

[Table 1]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

(continued)

| $\mu$ | $N_{symb}^{slot}$ | $N_{slot}^{frame,\mu}$ | $N_{slot}^{subframe,\mu}$ |
|---|---|---|---|
| 5 | 14 | 320 | 32 |

[Bandwidth Part (BWP)]

Next, the BWP configuration in a 5G communication system will be described in detail with reference to the drawings.

FIG. 3 is a diagram illustrating an example of the configuration of BWP in a wireless communication system according to an embodiment of the disclosure.

In FIG. 3, an example is provided in which a UE bandwidth 300 is configured with two BWPs, that is, BWP #1 301 and BWP #2 302. The base station may configure one or multiple BWPs for the UE, and may configure information as shown in Table 2 below for each BWP.

[Table 2]

```
BWP ::=                         SEQUENCE {
    bwp-Id                          BWP-Id,
    (bandwidth part identifier)
    locationAndBandwidth            INTEGER (1..65536),
    (bandwidth part location)
    subcarrierSpacing               ENUMERATED {n0, n1, n2, n3, n4, n5},
    (subcarrier spacing)
    cyclicPrefix                    ENUMERATED { extended }
    (cyclic prefix)
}
```

The above example is not a limitation, and various parameters related to a BWP may be configured in the UE in addition to the above configuration information. The above information may be transmitted by the base station to the UE via higher layer signaling, for example, radio resource control (RRC) signaling. At least one BWP among the configured one or multiple BWPs may be activated. Whether to activate the configured BWP may be semi-statically transmitted from the base station to the UE via RRC signaling or may be dynamically transmitted through downlink control information (DCI).

According some embodiments, the UE before RRC connection may be configured with an initial BWP for initial access from the base station through a master information block (MIB). Specifically, through the MIB in an initial access step, the UE may receive configuration information about a search apace and a control resource set (CORESET) through which the PDCCH for reception of system information required for initial access (which may correspond to remaining system information (RMSI) or system information block 1 (SIB 1)) can be transmitted. The CORESET and search space, which are configured through the MIB, may be regarded as identity (ID) 0, respectively. The base station may notify the UE of configuration information such as frequency allocation information, time allocation information, and numerology for the control resource set #0 through the MIB. In addition, the base station may notify the UE of configuration information regarding the monitoring periodicity and occasion for the control resource set #0, that is, configuration information regarding the search space #0, through the MIB. The UE may regard the frequency domain configured as the control resource set #0, obtained from the MIB, as an initial BWP for initial access. Here, the ID of the initial BWP may be regarded as zero.

The configuration of the BWP supported by 5G may be used for various purposes.

According to some embodiments, when a bandwidth supported by the UE is less than a system bandwidth, this may be supported through the BWP configuration. For example, the base station configures, in the UE, a frequency location (configuration information 2) of the BWP to enable the UE to transmit or receive data at a specific frequency location within the system bandwidth.

In addition, according to some embodiments, the base station may configure multiple BWPs in the UE for the purpose of supporting different numerologies. For example, in order to support both data transmission/reception using a subcarrier spacing of 15 kHz and a subcarrier spacing of 30 kHz in a certain UE, two BWPs may be configured with a subcarrier spacing of 15 kHz and a subcarrier spacing of 30 kHz, respectively. Different BWPs may be frequency division multiplexed, and when attempting to transmit or receive data at a specific subcarrier spacing, the BWP configured with that subcarrier spacing may be activated.

In addition, according to some embodiments, the base station may configure, for the UE, the BWPs having bandwidths of different sizes for the purpose of reducing power consumption of the UE. For example, when the UE supports a very large bandwidth, for example, a bandwidth of 100 MHz, and always transmits or receives data at that bandwidth, the transmission or reception may cause very high power consumption in the UE. In particular, when the UE performs monitoring on an unnecessary downlink control channels of a large bandwidth of 100 MHz even when there is no traffic, the monitoring may be very inefficient in terms of power consumption. Therefore, in order to reduce power consumption of the UE, the base station may configure, for the UE, a BWP of a relatively small bandwidth, for example, a BWP of 20 MHz. In a situation without traffic, the UE may perform a monitoring operation on a BWP of 20 MHz, and when data has occurred, the UE may transmit or receive data in a BWP of 100 MHz according to an indication of the base station.

In a method of configuring the BWP, the UEs before the RRC connection may receive configuration information about the initial BWP through the MIB in the initial connection step. Specifically, from the MIB of a physical broadcast channel (PBCH), the UE may be configured with a CORESET for a downlink control channel through which DCI for scheduling a SIB may be transmitted. The bandwidth of the control resource set configured through the MIB may be regarded as the initial BWP, and the UE may receive, through the configured initial BWP, a PDSCH through which the SIB is transmitted. The initial BWP may be used for other system information (OSI), paging, and random access as well as the reception of the SIB.

[Bandwidth Part (BWP) Switch]

When one or more BWPs have been configured for the UE, the base station may indicate the UE to change (or switch, transition) the BWP by using a bandwidth part indicator field in DCI. As an example, in FIG. 3, when the currently activated BWP of the UE is BWP #1 301, the base station may indicate BWP #2 302 to the UE by using the BWP indicator in DCI, and the UE may perform a BWP switch to the BWP #2 302 indicated by the BWP indicator in the received DCI.

As described above, since the DCI-based BWP switch may be indicated by the DCI scheduling the PDSCH or PUSCH, when receiving a request to switch the BWP, the UE should be able to receive or transmit the PDSCH or PUSCH, which is scheduled by the DCI, without difficulty in the switched BWP. To this end, the standard stipulates requirements for a delay time ($T_{BWP}$) required when switching the BWP, and it may be defined as in Table 3 below.

[Table 3]

| $\mu$ | NR Slot length (ms) | BWP switch delay $T_{BWP}$ (slots) | |
|---|---|---|---|
| | | Type $1^{\text{Note 1}}$ | Type $2^{\text{Note 1}}$ |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability.<br>Note 2: If the BWP switch involves changing of SCS, the BWP switch delay is determined by the larger one between the SCS before BWP switch and the SCS after BWP switch. | | | |

The requirements for the BWP switch delay time support type 1 or type 2 depending on UE capability. The UE may report a BWP delay time type that is supportable to the base station.

When the UE receives the DCI including the BWP switch indicator in slot n according to the requirements for the BWP switch delay time, the UE may complete a switch to a new BWP indicated by the BWP switch indicator at a time not later than slot n+$T_{BWP}$, and may perform transmission and reception for a data channel scheduled by the corresponding DCI in the switched new BWP. When the base station intends to schedule the data channel to the new BWP, the base station may determine a time domain resource assignment for the data channel by considering the BWP switch delay time ($T_{BWP}$) of the UE. That is, when scheduling the data channel to the new BWP, the base station may schedule the data channel after the BWP switch delay time in a method for determining time domain resource assignment for the data channel. Therefore, the UE may not expect the DCI indicating the BWP switch to indicate a slot offset (K0 or K2) value less than the $T_{BWP}$.

If the UE receives the DCI (e.g., DCI format 1_1 or 0_1) indicating the BWP switch, the UE may not perform transmission or reception during a time interval from a third symbol of the slot in which the PDCCH including the DCI is received, to a start time of the slot indicated by the slot offset (K0 or K2) value indicated by the time domain resource allocation indicator field in the DCI. For example, if the UE has received the DCI indicating the BWP switch in slot n and the slot offset value indicated by the DCI is K, the UE may not perform transmission or reception from the third symbol of the slot n to the symbol prior to slot n+K (i.e., the last symbol of slot n+K-1).

[SS/PBCH Block]

Next, a synchronization signal (SS)/PBCH block in 5G will be described.

The SS/PBCH block may refer to a physical layer channel block composed of a primary SS (PSS), a secondary SS (SSS), and a PBCH. Specifically, they are as follows:

- PSS: It is a signal serving as a reference for downlink time/frequency synchronization and provides some information of a cell ID.
- SSS: It is a signal serving as a reference for downlink time/frequency synchronization, and provides the remaining cell ID information that is not provided by the PSS. In addition, it may serve as a reference signal for demodulation of the PBCH.
- PBCH: It provides essential system information required for transmission or reception of a data channel and a control channel of a UE. The essential system information may include search space related control information indicating radio resource mapping information of a control channel, scheduling control information for a separate data channel for transmission of system information, and the like.
- SS/PBCH block: It is composed of a combination of the PSS, the SSS, and the PBCH. One or multiple SS/PBCH blocks may be transmitted within 5 ms, and the respective SS/PBCH blocks transmitted may be distinguished by indexes.

The UE may detect the PSS and the SSS in the initial access step and may decode the PBCH. The UE may obtain the MIB from the PBCH and may be configured with CORESET #0 (which may correspond to the control resource set having CORESET index of 0) therefrom. The UE may monitor the control resource set #0 under the assumption that a demodulation reference signal (DMRS) transmitted in the selected SS/PBCH block and the control resource set #0 is quasi-co-located (QCLed). The UE may receive system information with downlink control information transmitted from the control resource set #0. The UE may obtain, from the received system information, configuration information related to an RACH required for initial access. The UE may transmit a physical RACH (PRACH) to the base station by considering the selected SS/PBCH index, and the base station having received the PRACH may obtain information about an SS/PBCH block index selected by the UE. The base station may know which block is selected among the SS/PBCH blocks by the UE, and may know that the control resource set #0 associated therewith is monitored.

[PDCCH: DCI Related]

Next, DCI in a 5G system will be described in detail.

In the 5G system, scheduling information about uplink data (or physical uplink shared channel (PUSCH)) or downlink data (or physical downlink shared channel (PDSCH)) is transmitted from the base station to the UE through the DCI. For the PUSCH or the PDSCH, the UE may monitor a fallback DCI format and a non-fallback DCI format. The fallback DCI format may include a fixed field predefined between the base station and the UE, and the non-fallback DCI format may include a configurable field.

The DCI may be transmitted through a physical downlink control channel (PDCCH) after channel coding and modulation is performed thereon. A cyclic redundancy check (CRC) may be attached to a DCI message payload, and the CRC may be scrambled by a radio network temporary identifier (RNTI) corresponding to the identity of the UE. Different RNTIs may be used according to the purpose of the DCI message, for example, a UE-specific data transmission, a power adjustment command, or a random access response. That is, the RNTI is not explicitly transmitted, but is included in a CRC calculation process and then transmitted. Upon receiving the DCI message transmitted through the PDCCH, the UE may check a CRC by using an assigned RNTI. When a CRC check result is correct, the UE may know that the corresponding message has been transmitted to the UE.

For example, the DCI for scheduling a PDSCH for system information (SI) may be scrambled by an SI-RNTI. The DCI for scheduling a PDSCH for a random access response (RAR) message may be scrambled by an RA-RNTI. The DCI for scheduling a PDSCH for a paging message may be scrambled by a P-RNTI. The DCI for notifying of a slot format indicator (SFI) may be scrambled by an SFI-RNTI. The DCI for notifying of transmit power control (TPC) may be scrambled by a TPC-RNTI. The DCI for scheduling UE-specific PDSCH or PUSCH may be scrambled by a cell RNTI (C-RNTI).

DCI format 0_0 may be used as a fallback DCI for scheduling a PUSCH. Here, a CRC may be scrambled by a C-RNTI. The DCI format 0_0 in which the CRC is scrambled by the C-RNTI may include, for example, the following information in Table 4.

[Table 4]

| |
|---|
| - Identifier for DCI formats - [1] bit |
| $-[\lceil \log_2(N_{RB}^{UL,BWP}(N_{RB}^{UL,BWP}+1)/2) \rceil]$ |
| - Frequency domain resource assignment bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - TPC (transmit power control) command for scheduled PUSCH - [2] bits |
| - UL/SUL (supplementary US) indicator - 0 or 1 bit |

DCI format 0_1 may be used as a non-fallback DCI for scheduling a PUSCH. Here, a CRC may be scrambled by a C-RNTI. The DCI format 0_1 in which the CRC is scrambled by the C-RNTI may include, for example, the following information in Table 5.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| • For resource allocation type 0, $\lceil N_{RB}^{UL,BWP}/P \rceil$ bits |
| $\lceil \log_2(N_{RB}^{UL,BWP}(N_{RB}^{UL,BWP}+1)/2) \rceil$ |
| • For resource allocation type 1, bits |
| - Time domain resource assignment -1, 2, 3, or 4 bits |
| - VRB (virtual resource block)-to-PRB (physical resource block) mapping - 0 or 1 bit, only for resource allocation type 1. |
| • 0 bit if only resource allocation type 0 is configured; |
| • 1 bit otherwise. |
| - Frequency hopping flag - 0 or 1 bit, only for resource allocation type 1. |
| • 0 bit if only resource allocation type 0 is configured; |
| • 1 bit otherwise. |
| - Modulation and coding scheme - 5 bits |
| - New data indicator - 1 bit |
| - Redundancy version - 2 bits |
| - HARQ process number - 4 bits |

(continued)

| |
|---|
| - 1st downlink assignment index - 1 or 2 bits<br>• 1 bit for semi-static HARQ-ACK codebook;<br>• 2 bits for dynamic HARQ-ACK codebook with single HARQ-ACK codebook. |
| - 2nd downlink assignment index - 0 or 2 bits<br>• 2 bits for dynamic HARQ-ACK codebook with two HARQ-ACK sub-codebooks;<br>• 0 bit otherwise. |
| - TPC command for scheduled PUSCH - 2 bits |
| $\left\lceil \log_2\left(\sum_{k=1}^{L_{\max}}\binom{N_{\text{SRS}}}{k}\right)\right\rceil$ |
| - SRS resource indicator - or $\lceil \log_2(N_{\text{SRS}})\rceil$ bits<br>• $\left\lceil \log_2\left(\sum_{k=1}^{L_{\max}}\binom{N_{\text{SRS}}}{k}\right)\right\rceil$ bits for non-codebook based PUSCH transmission;<br>• $\lceil \log_2(N_{\text{SRS}})\rceil$ bits for codebook based PUSCH transmission. |
| - Precoding information and number of layers -up to 6 bits |
| - Antenna ports - up to 5 bits |
| - SRS request - 2 bits |
| - CSI request - 0, 1, 2, 3, 4, 5, or 6 bits |
| - CBG (code block group) transmission information - 0, 2, 4, 6, or 8 bits |
| - PTRS (phase tracking reference signal)-DMRS (demodulation reference signal) association - 0 or 2 bits. |
| - beta_offset indicator - 0 or 2 bits |
| - DMRS sequence initialization - 0 or 1 bit |

DCI format 1_0 may be used as a fallback DCI for scheduling a PDSCH. Here, a CRC may be scrambled by a C-RNTI. The DCI format 1_0 in which the CRC is scrambled by the C-RNTI may include, for example, the following information in Table 6.

[Table 6]

| |
|---|
| - Identifier for DCI formats - [1] bit |
| $[\lceil \log_2(N_{\text{RB}}^{\text{DL,BWP}}(N_{\text{RB}}^{\text{DL,BWP}}+1)/2)\rceil]$ |
| - Frequency domain resource assignment - bits |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - PUCCH (physical uplink control channel) resource indicator - 3 bits |
| - PDSCH-to-HARQ feedback timing indicator - [3] bits |

DCI format 1_1 may be used as a non-fallback DC for scheduling a PDSCH. Here, a CRC may be scrambled by a C-RNTI. The DCI format 1_1 in which the CRC is scrambled by the C-RNTI may include, for example, the following information.

[Table 7]

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |
| • For resource allocation type 0, $\lceil N_{RB}^{DL,BWP}/P \rceil$ bits |
| $\lceil \log_2(N_{RB}^{DL,BWP}(N_{RB}^{DL,BWP}+1)/2) \rceil$ |
| • For resource allocation type 1, bits |
| - Time domain resource assignment -1, 2, 3, or 4 bits |
| - VRB-to-PRB mapping - 0 or 1 bit, only for resource allocation type 1. |
| • 0 bit if only resource allocation type 0 is configured; |
| • 1 bit otherwise. |
| - PRB (physical resource block) bundling size indicator - 0 or 1 bit |
| - Rate matching indicator - 0, 1, or 2 bits |
| - ZP (zero power) CSI-RS (channel state information reference signal) trigger - 0, 1, or 2 bits |
| For transport block 1: |
| - Modulation and coding scheme - 5 bits |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication - 0 or 3 bits |
| - SRS request - 2 bits |
| - CBG (code block group) transmission information - 0, 2, 4, 6, or 8 bits |
| - CBG flushing out information - 0 or 1 bit |
| - DMRS sequence initialization - 1 bit |

[PDCCH: CORESET, REG, CCE, Search Space]

A downlink control channel in a 5G communication system will be described below in detail with reference to the drawings.

FIG. 4 is a diagram illustrating an example of a control resource set (CORESET) where a downlink control channel is transmitted in a 5G wireless communication system. FIG. 4 shows an example in which a UE BWP 410 is configured in a frequency domain and two CORESETs (CORESET #1 401 and CORESET #2 402) are configured within one slot 420 in a time domain. The CORESETs 401 and 402 may be configured in specific frequency resources 403 within the entire UE BWP 410 in the frequency domain. One or multiple OFDM symbols may be configured in the time domain and defined as a control resource set duration 404. In an example shown in FIG. 4, the CORESET #1 401 is configured with the control resource set duration of two symbols, and the CORESET #2 402 is configured with the control resource set duration of one symbol.

The above-described CORESET in 5G may be configured for the UE by the base station via higher layer signaling (e.g., system information (SI), master information block (MIB), radio resource control (RRC) signaling). Configuring the CORESET for the UE refers to providing information such as a CORESET identity, a frequency location of the CORESET, a symbol length of the CORESET, and the like. For example, it may include the following information in Table 8.

[Table 8]

```
ControlResourceSet ::=       SEQUENCE {
-- Corresponds to L1 parameter 'CORESET-ID'
controlResourceSetId         ControlResourceSetId,
(CORESSET identity)
frequencyDomainResources     BIT STRING (SIZE (45)),
(Frequency domain resource allocation information)
duration                     INTEGER (1..maxCoReSetDuration),
(Time domain resource allocation information
```

```
cce-REG-MappingType          CHOICE {
(CCE-to-REG mapping type)
interleaved                  SEQUENCE {
reg-BundleSize               ENUMERATED {n2, n3, n6},
(REG bundle size)
precoderGranularity          ENUMERATED {sameAsREG-bundle,
allContiguousRBs},
interleaverSize              ENUMERATED {n2, n3, n6}
(Interleaver size)
shiftIndex                   INTEGER(0..maxNrofPhysicalResourceBlocks-1)
OPTIONAL
(Interleaver shift)
},
nonInterleaved               NULL
},
tci-StatesPDCCH              SEQUENCE(SIZE (1..maxNrofTCI-StatesPDCCH)) OF
TCI-StateId                  OPTIONAL,
(QCL configuration information)
tci-PresentInDCI             ENUMERATED {enabled}     OPTIONAL,     -- Need S
}
```

In Table 8, tci-StatesPDCCH (simply referred to as transmission configuration indication (TCI) state) configuration information may include information about one or multiple synchronization signal/physical broadcast channel (SS/PBCH) block indexes or channel state information reference signal (CSI-RS) indexes having a QCL relationship with a DMRS transmitted in the corresponding CORESET.

FIG. 5 is a diagram illustrating an example of the basic unit of time and frequency resources configuring a downlink control channel that can be used in 5G. According to FIG. 5, the basic unit of time and frequency resources configuring a control channel may be referred to as a resource element group (REG) 603, which may be defined as one OFDM symbol 501 in a time domain and one physical resource block (PRB) 502, i.e., 12 subcarriers, in a frequency domain. The base station may concatenate the REGs 503 to configure a downlink control channel allocation unit.

As shown in FIG. 5, when a basic unit to which a downlink control channel is allocated in 5G is referred to as a control channel element (CCE) 504, one CCE 504 may consist of multiple REGs 503. In the example shown in FIG. 5, the REG 503 may include 12 REs, and when one CCE 504 consist of six REGs 503, one CCE 504 may include 72 REs. When the downlink CORESET is configured, it may include multiple CCEs 504. A specific downlink control channel may be transmitted after being mapped to one or more CCEs 504 according to an aggregation level (AL) in the CORESET. The CCEs 504 in the CORESET are distinguished by numbers. Here, the numbers of the CCEs 504 may be assigned according to a logical mapping scheme.

The basic unit of the downlink control channel shown in FIG. 5, that is, the REG 503 may include both REs to which DCI is mapped and a region to which a DMRS 505 which is a reference signal for decoding the DCI is mapped. As shown in FIG. 5, three DMRSs 505 may be transmitted in one REG 503. The number of CCEs required for transmission of the PDCCH may be 1, 2, 4, 8, or 16 according to the AL. A different number of CCEs may be used to implement link adaptation of the downlink control channel. For example, if AL=L, one downlink control channel may be transmitted through L CCEs. The UE needs to detect a signal in a state in which the UE does not know information about the downlink control channel, and a search space representing a set of CCEs has been provided for blind decoding. The search space is a set of downlink control channel candidates including CCEs that the UE has to attempt to decode at a given AL. Since there are various ALs that make one bundle of 1, 2, 4, 8, or 16 CCEs, the UE may have multiple search spaces. A search space set may be defined as a set of search spaces at all configured ALs.

The search space may be classified into a common search space and a UE-specific search space. A predetermined group of UEs or all the UEs may examine the common search space of the PDCCH so as to receive cell common control information such as dynamic scheduling of system information or a paging message. For example, PDSCH scheduling allocation information for transmission of the SIB including cell operator information and the like may be received by examining the common search space of the PDCCH. In a case of the common search space, since a predetermined group of UEs or all the UEs need to receive the PDCCH, the common search space may be provided as a set of previously appointed CCEs. Scheduling allocation information about the UE-specific PDSCH or PUSCH may be received by examining the UE-specific search space of the PDCCH. The UE-specific search space may be UE-specifically provided as a function of the UE identity and various system parameters.

In 5G, the parameter for the search space of the PDCCH may be configured for the UE by the base station via higher layer signaling (e.g., SIB, MIB, RRC signaling, etc.). For example, the base station may configure, for the UE, the number of PDCCH candidates at each aggregation level L, the monitoring periodicity for the search space, the monitoring occasion of symbol units in the slots for the search space, the search space type (common search space or UE-specific search space), the combination of RNTI and DCI format to be monitored in the search space, the control resource set index to monitor the search space, and the like. For example, it may include the following information in Table 9.

[Table 9]

| |
|---|
| SearchSpace ::= SEQUENCE { |
| -- Identity of the search space. SearchSpaceId = 0 identifies the SearchSpace configured via PBCH (MIB) or ServingCellConfigCommon. |
| searchSpaceId SearchSpaceId, |
| (Search space identifier) |
| controlResourceSetId ControlResourceSetId, |
| (CORESET identifier) |
| monitoringSlotPeriodicityAndOffset CHOICE { |
| (Monitoring slot level periodicity) |

```
sl1                              NULL,
sl2                              INTEGER (0..1),
sl4                              INTEGER (0..3),
sl5                              INTEGER (0..4),
sl8                              INTEGER (0..7),
sl10                             INTEGER (0..9),
sl16                             INTEGER (0..15),
sl20                             INTEGER (0..19)
}                                    OPTIONAL,
Duration (Monitoring length)       INTEGER (2..2559)
monitoringSymbolsWithinSlot        BIT STRING (SIZE (14))   OPTIONAL,
(Monitoring symbol within slot)
nrofCandidates                     SEQUENCE {
(Number of PDCCH candidates per aggregation level)
aggregationLevel1                ENUMERATED {n0, n1, n2, n3, n4, n5, n6, n8},
aggregationLevel2                ENUMERATED {n0, n1, n2, n3, n4, n5, n6, n8},
aggregationLevel4                ENUMERATED {n0, n1, n2, n3, n4, n5, n6, n8},
aggregationLevel8                ENUMERATED {n0, n1, n2, n3, n4, n5, n6, n8},
aggregationLevel16               ENUMERATED {n0, n1, n2, n3, n4, n5, n6, n8}
},
searchSpaceType                  CHOICE {
(Search space type)
-- Configures this search space as common search space (CSS) and DCI formats to
monitor.
common                           SEQUENCE {
(Common search space)
}
ue-Specific                      SEQUENCE {
-- Indicates whether the UE monitors in this USS for DCI formats 0-0 and 1-0 or
for formats 0-1 and 1-1.
formats                          ENUMERATED {formats0-0-And-1-0, formats0-
1-And-1-1},
...
```

| } |
|---|

Based on configuration information, the base station may configure one or more search space sets for the UE. According to some embodiments, the base station may configure search space set 1 and search space set 2 in the UE. The base station may configure the search space set 1 in the UE so that DCI format A scrambled by an X-RNTI is monitored in the common search space. The base station may configure the search space set 2 in the UE so that DCI format B scrambled by a Y-RNTI is monitored in the UE-specific search space.

According to the configuration information, one or multiple search space sets may exist in the common search space or the UE-specific search space. For example, search space set #1 and search space set #2 may be configured as the common search space, and search space set #3 and search space set #4 may be configured as the UE-specific search space.

In the common search space, the following combinations of the DCI format and the RNTI may be monitored. However, the disclosure is not limited to below.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combinations of the DCI format and the RNTI may be monitored. However, the disclosure is not limited to below.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the definitions and usages described below.

- Cell RNTI (C-RNTI): For UE-specific PDSCH scheduling
- Temporary Cell RNTI (TC-RNTI): For UE-specific PDSCH scheduling
- Configured Scheduling RNTI (CS-RNTI): For semi-statically configured UE-specific PDSCH scheduling
- Random Access RNTI (RA-RNTI): For PDSCH scheduling in random access operation
- Paging RNTI (P-RNTI): For scheduling of PDSCH through which paging is transmitted
- System Information RNTI (SI-RNTI): For PDSCH scheduling in which system information is transmitted
- Interruption RNTI (INT-RNTI): For notifying of whether to puncture PDSCH.
- Transmit Power Control for PUSCH RNTI (TPC-PUSCH-RNTI): For indication of power control command for PUSCH
- Transmit Power Control for PUCCH RNTI (TPC-PUCCH-RNTI): For indication of power control command for PUCCH
- Transmit Power Control for SRS RNTI (TPC-SRS-RNTI): For indication of power control command for SRS

The above-described specified DCI formats may follow the definition as in Table 10.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space of the aggregation level L in the CORESET p and the search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- L: Aggregation level
- $n_{CI}$: Carrier index
- $N_{CCE,p}$: Total number of CCEs existing in the CORESET p
- $n_{s,f}^{\mu}$: Slot index
- $M_{s,max}^{(L)}$: Number of PDCCH candidates of aggregation level L
- $m_{s,nCI}$=0, . . ., $M_{s,max}^{(L)}$-1: PDCCH candidate group index of aggregation level L
- i=0, ..., L-1
- $Y_{p,ns,f\mu}=(A_p \cdot Y_{p,ns,f\mu-1})$mod D, $Y_{p,-1}=n_{RNTI}\neq 0$, $A_0$=39827, $A_1$=39829, $A_2$=39839, D=65537
- $n_{RNTI}$: UE identifier

In the case of the common search space, the $Y_{p,ns,f\mu}$ value may correspond to zero.

In the case of the UE-specific search space, the $Y_{p,ns,f\mu}$ value may correspond to a value that changes according to the UE identity (C-RNTI or ID configured by the base station for the UE) and the time index.

In 5G, multiple search space sets may be configured with different parameters (e.g., parameters in Table 9), and thus the set of search space sets monitored by the UE may differ at each time point. For example, if search space set #1 is configured with the X-slot period, search space set #2 is configured with the Y-slot period, and X and Y are different, the UE may monitor both search space set #1 and space set #2 in a specific slot, and may monitor one of search space set #1 and search space set #2 in a specific slot.

FIG. 6 is a diagram illustrating a method in which a base station and a UE perform data transmission/reception by considering a downlink data channel and a rate matching resource according to an embodiment of the disclosure.

In FIG. 6, a downlink data channel (PDSCH) 601 and a rate matching resource 602. The base station may configure one or more rate matching resources 602 in the UE through higher layer signaling (e.g., RRC signaling). The configuration information of the rate matching resource 602 may include time-domain resource allocation information 603, frequency-domain resource assignment information 604, and periodicity information 605. In the following description, a bitmap corresponding to the frequency-domain resource assignment information 604 is called a "first bitmap", a bitmap corresponding to the time-domain resource allocation information 603 is called a "second bitmap", and a bitmap corresponding to the periodicity information 605 is called a "third bitmap". If some or all of the time and frequency resources of the scheduled data channel 601 overlap the configured rate matching resource 602, the base station may rate-match the data channel 601 in the rate matching resource 602 and transmit the same. The UE may perform data reception and decoding after assuming that the data channel 601 has been rate-matched in the rate matching resource 602.

The base station may dynamically notify the UE of whether the data channel will be rate-matched in the configured rate matching resource via DCI through an additional configuration (corresponding to a "rate matching indicator" in the DCI format described above). Specifically, the base station may select some of the configured rate matching resources, may group the selected resources into a rate matching resource group, and may indicate whether the data channel has been rate-matched with each rate matching resource group through DCI using a bitmap method to the UE. For example, when four rate matching resources RMR #1, RMR #2, RMR #3 and RMR #4 have been configured, the base station may configure RMG #1={RMR #1, RMR #2} and RMG #2={RMR #3, RMR #4} as rate matching groups, and may indicate whether rate matching in each of RMG #1 and RMG #2 has been performed using 2 bits of a DCI field to the UE in the form of a bitmap. For example, the base station may indicate "1" if rate matching needs to be performed, and may indicate "0" if rate matching does not need to be performed.

5G supports the granularity of "RB symbol level" and "RE level" as a method of configuring the above-described rate matching resource in the UE. Specifically, the following configuration method may be followed.

## RB Symbol Level

The UE may be configured with up to four RateMatchPatterns for each BWP via higher layer signaling, and one RateMatchPattern may include the following contents.

**[0085]** - A reserved resource in the BWP may include a resource, in which a time and frequency resource region of the corresponding reserved resource is configured as a combination of an RB-level bitmap and a symbol-level bitmap on the frequency axis. The reserved resource may span over one or two slots. The UE may be additionally configured with a time-domain pattern (periodicityAndPattern) in which the time and frequency domain including a pair of RB level and symbol level bitmaps are repeated.

**[0086]** - A time and frequency domain resource region configured as a CONRESET in the BWP and a resource region corresponding to a time-domain pattern configured as a search space configuration in which the resource region is repeated may be included.

**RE Level**

The UE may be configured with the following information through higher layer signaling.

- The number of ports (nrofCRS-Ports) and LTE-CRS-vshift(s) value (v-shift) of LTE CRS as configuration information (lte-CRS-ToMatchAround) for RE corresponding to an LTE cell-specific reference signal or common reference signal (CRS) pattern, center subcarrier location information (carrierFreqDL) of an LTE carrier from the reference frequency point (e.g., reference point A), the bandwidth size (carrierBandwidthDL) information of the LTE carrier, subframe configuration information (mbsfn-SubframConfigList) corresponding to a multicast-broadcast single-frequency network (MBSFN), and the like may be included. The UE may determine the location of the CRS in the NR slot corresponding to the LTE subframe based on the above-described information.
- Configuration information for a resource set corresponding to one or multiple zero power (ZP) CSI-RSs in the bandwidth part may be included.

[PDSCH: Frequency-domain resource assignment Related]

FIG. 7 is a diagram illustrating an example of frequency-domain resource assignment of a physical downlink shared channel (PDSCH) in a wireless communication system according to an embodiment of the disclosure.

FIG. 7 shows three frequency-domain resource assignment methods of type 0 (7-00), type 1 (7-05), and dynamic switch (7-10) configurable through a higher layer in an NR wireless communication system.

With reference to FIG. 7, if a UE is configured to use only resource type 0 via higher layer signaling (7-00), some downlink control information (DCI) for allocation of PDSCH to the corresponding UE includes a bitmap formed of NRBG bits. The conditions for this will be described again later. Here, NRBG denotes the number of resource block groups (RBGs) determined, as in Table 11 below, according to a BWP size allocated by a BWP indicator and a higher layer parameter rbg-Size, and data is transmitted to RBG indicated as '1' in the bitmap.

[Table 11]

| Bandwidth Part Size | Configuration 1 | Configuration 2 |
|---|---|---|
| 1- 36 | 2 | 4 |
| 37 - 72 | 4 | 8 |
| 73 - 144 | 8 | 16 |
| 145 - 275 | 16 | 16 |

If the UE is configured to use only resource type 1 via higher layer signaling (7-05), some DCI for allocation of the PDSCH to the UE includes frequency-domain resource assignment information configured by

$$\lceil \log_2 (N_{RB}^{DL,BWP} (N_{RB}^{DL,BWP} +1)/2 \rceil$$

bits. The conditions for this will be described again later. Through this, the base station may configure a starting VRB 7-20 and the length of frequency-domain resources 7-25 continuously allocated therefrom.

If the UE is configured to use both resource type 0 and resource type 1 via higher layer signaling (7-10), some DCI for allocation of PDSCH to the UE includes frequency-domain resource assignment information configured by bits of a greater value 7-35 among a payload 7-15 for configuration of resource type 0 and payloads 7-20 and 7-25 for configuration of resource type 1. The conditions for this will be described again later. Here, one bit is added to the most significant bit (MSB) of the frequency-domain resource assignment information in the DCI, if the corresponding bit has a value of '0', it indicates that resource type 0 is used, and if the corresponding bit has a value of '1', it indicates that resource type 1 is used.

[PDSCH/PUSCH: Time-Domain Resource Allocation Related]

Hereinafter, a method of allocating time domain resources for a data channel in a next-generation mobile communication system (5G or NR system) will be described.

A base station may configure, for a UE, a table for time-domain resource allocation information for a physical downlink shared channel (PDSCH) and a physical uplink shared channel (PUSCH) via higher layer signaling (e.g., RRC signaling). For PDSCH, a table including maxNrofDL-Allocations=16 entries may be configured, and for PUSCH, a table including maxNrofUL-Allocations=16 entries may be configured. In an embodiment, the time-domain resource allocation information may include PDCCH-to-PDSCH slot timing (corresponding to a time interval in slot units between a time point at which a PDCCH is received and a time point at which a PDSCH scheduled by the received PDCCH is transmitted, and denoted by K0), PDCCH-to-PUSCH slot timing (corresponding to a time interval in slot units between a time point at which a PDCCH is received and a time point at which a PUSCH scheduled by the received PDCCH is transmitted, and denoted by K2), information on the position and length of a start symbol in which the PDSCH or PUSCH is scheduled within a slot, a mapping type of PDSCH or PUSCH, and the like. For example, information such as Table 12 or Table 13 below may be transmitted from the base station to the UE.

[Table 12]

| |
|---|
| PDSCH-TimeDomainResourceAllocationList information element<br>PDSCH-TimeDomainResourceAllocationList ::= SEQUENCE (SIZE(1..maxNrofDL-Allocations)) OF PDSCH-TimeDomainResourceAllocation<br><br>PDSCH-TimeDomainResourceAllocation ::= SEQUENCE {<br>k0 INTEGER(0..32) OPTIONAL, -- Need S<br>(PDCCH-to-PDSCH timing, slot unit)<br>mappingType ENUMERATED {typeA, typeB},<br>(PDSCH mapping type)<br>startSymbolAndLength INTEGER (0..127)<br>(Start symbol and length of PDSCH)<br>} |

[Table 13]

| |
|---|
| PUSCH-TimeDomainResourceAllocation information element |
| PUSCH-TimeDomainResourceAllocationList ::= SEQUENCE (SIZE(1..maxNrofUL-Allocations)) OF PUSCH-TimeDomainResourceAllocation |
| |
| PUSCH-TimeDomainResourceAllocation ::= SEQUENCE { |
| k2 INTEGER(0..32) OPTIONAL, -- Need S |
| (PDCCH-to-PUSCH timing, slot unit) |
| mappingType ENUMERATED {typeA, typeB}, |
| (PUSCH mapping type) |
| startSymbolAndLength INTEGER (0..127) |
| (Start symbol and length of PUSCH) |
| } |

The base station may notify one of the entries in the above-described table representing the time-domain resource allocation information to the UE via L1 signaling (e.g., DCI) (e.g., may be indicated by a 'time-domain resource allocation' field in DCI). The UE may acquire time-domain resource allocation information for the PDSCH or PUSCH based on the DCI received from the base station.

FIG. 8 is a diagram illustrating an example of time-domain resource allocation of a PDSCH in a wireless communication system according to an embodiment of the disclosure.

With reference to FIG. 8, the base station may indicate a time-domain position of a PDSCH resource according to the subcarrier spacings (SCSs) ($\mu_{PDSCH}$, $\mu_{PDCCH}$) of a data channel and a control channel and a scheduling offset (K0) value configured using a higher layer, and a start position 8-00 and a length 8-05 of an OFDM symbol in one slot dynamically indicated via DCI.

FIG. 9 is a diagram illustrating an example of time-domain resource allocation based on subcarrier spacings of a data channel and a control channel in a wireless communication system according to an embodiment of the disclosure.

With reference to FIG. 9, in the case 9-00 where the data channel and the control channel have the same subcarrier spacing ($\mu_{PDSCH} = \mu_{PDCCH}$), the slot numbers for data and control are the same, so that the base station and the UE may generate a scheduling offset in accordance with a predetermined slot offset K0. On the other hand, in the case 9-05 where the data channel and the control channel have different subcarrier spacings ($\mu_{PDSCH} \neq \mu_{PDCCH}$), the slot numbers for data and control are different, so that the base station and the UE may generate a scheduling offset in accordance with a predetermined slot offset K0 based on the subcarrier spacing of the PDCCH.

[PUSCH: Transmission Scheme Related]

Next, a scheduling scheme of PUSCH transmission will be described. The PUSCH transmission may be dynamically scheduled by a UL grant in DCI or may be operated by a configured grant Type 1 or Type 2. Dynamic scheduling indication for PUSCH transmission is possible using DCI format 0_0 or 0_1.

Configured grant Type 1 PUSCH transmission does not receive a UL grant in DCI and may be semi-statically configured through reception of configuredGrantConfig including rrc-ConfiguredUplinkGrant of Table 14 via higher layer signaling. Configured grant Type 2 PUSCH transmission may be semi-persistently scheduled by UL grant in DCI after reception of configuredGrantConfig that does not include the rrc-ConfiguredUplinkGrant of Table 14 via higher layer signaling. When PUSCH transmission is operated by a configured grant, parameters applied to PUSCH transmission are applied through configuredGrantConfig, which is higher layer signaling of Table 14, except for dataScramblingIdentity-PUSCH, txConfig, codebookSubset, maxRank, and scaling of UCI-OnPUSCH, which are provided by pusch-Config of Table 15, which is higher layer signaling. If the UE is provided with transformPrecoder in configuredGrantConfig, which is higher layer signaling of Table 14, the UE applies tp-pi2BPSK in the pusch-Config of Table 15 with regards to PUSCH transmission operated by the configured grant.

[Table 14]

```
ConfiguredGrantConfig ::=                SEQUENCE {
    frequencyHopping                         ENUMERATED {intraSlot, interSlot}
OPTIONAL,    -- Need S,
    cg-DMRS-Configuration                    DMRS-UplinkConfig,
    mcs-Table                                ENUMERATED {qam256, qam64LowSE}
OPTIONAL,    -- Need S
    mcs-TableTransformPrecoder               ENUMERATED {qam256, qam64LowSE}
OPTIONAL,    -- Need S
    uci-OnPUSCH                              SetupRelease { CG-UCI-OnPUSCH }
OPTIONAL,    -- Need M
    resourceAllocation                       ENUMERATED { resourceAllocationType0,
resourceAllocationType1, dynamicSwitch },
    rbg-Size                                 ENUMERATED {config2}
OPTIONAL,    -- Need S
    powerControlLoopToUse                    ENUMERATED {n0, n1},
    p0-PUSCH-Alpha                           P0-PUSCH-AlphaSetId,
    transformPrecoder                        ENUMERATED {enabled, disabled}
OPTIONAL,    -- Need S
    nrofHARQ-Processes                       INTEGER(1..16),
    repK                                     ENUMERATED {n1, n2, n4, n8},
    repK-RV                                  ENUMERATED {s1-0231, s2-0303, s3-
0000}                                    OPTIONAL,    -- Need R
```

```
periodicity                                   ENUMERATED {
                                                        sym2, sym7, sym1x14,
sym2x14, sym4x14, sym5x14, sym8x14, sym10x14, sym16x14, sym20x14,
                                                        sym32x14, sym40x14,
sym64x14, sym80x14, sym128x14, sym160x14, sym256x14, sym320x14, sym512x14,
                                                        sym640x14, sym1024x14,
sym1280x14, sym2560x14, sym5120x14,
                                                        sym6, sym1x12, sym2x12,
sym4x12, sym5x12, sym8x12, sym10x12, sym16x12, sym20x12, sym32x12,
                                                        sym40x12, sym64x12,
sym80x12, sym128x12, sym160x12, sym256x12, sym320x12, sym512x12, sym640x12,
                                                        sym1280x12, sym2560x12
    },
    configuredGrantTimer                          INTEGER (1..64)
OPTIONAL,     -- Need R
    rrc-ConfiguredUplinkGrant                     SEQUENCE {
        timeDomainOffset                              INTEGER (0..5119),
        timeDomainAllocation                          INTEGER   (0..15),
        frequencyDomainAllocation                     BIT STRING (SIZE(18)),
        antennaPort                                   INTEGER (0..31),
        dmrs-SeqInitialization                        INTEGER (0..1)
OPTIONAL,     -- Need R
        precodingAndNumberOfLayers                    INTEGER (0..63),
        srs-ResourceIndicator                         INTEGER (0..15)
OPTIONAL,     -- Need R
        mcsAndTBS                                     INTEGER (0..31),
        frequencyHoppingOffset                        INTEGER (1..
maxNrofPhysicalResourceBlocks-1)                      OPTIONAL,     -- Need R
        pathlossReferenceIndex                        INTEGER (0..maxNrofPUSCH-
PathlossReferenceRSs-1),
        ...
    }
OPTIONAL,     -- Need R
    ...
}
```

Next, a PUSCH transmission method will be described. A DMRS antenna port for PUSCH transmission is the same as an antenna port for SRS transmission. PUSCH transmission may be based on a codebook-based transmission method and a non-codebook-based transmission method, respectively, depending on whether the value of txConfig in pusch-Config of Table 15, which is higher layer signaling, is ’codebook’ or ’nonCodebook’.

As described above, the PUSCH transmission may be dynamically scheduled through DCI format 0_0 or 0_1, and may be semi-statically configured by a configured grant. If the UE is indicated to schedule PUSCH transmission through DCI format 0_0, the UE performs beam configuration for PUSCH transmission by using pucch-spatialRelationInfoID corresponding to the UE-specific PUCCH resource corresponding to the minimum ID in the uplink BWP activated in the serving cell, and here, PUSCH transmission is based on a single antenna port. The UE does not expect scheduling for PUSCH transmission through DCI format 0_0 within a BWP in which the PUCCH resource including the pucch-spatialRelationInfo is not configured. If the UE is not configured with txConfig in pusch-Config of Table 15, the UE does not expect to be scheduled in DCI format 0_1.

[Table 15]

```
PUSCH-Config ::=                                SEQUENCE {
      dataScramblingIdentityPUSCH                    INTEGER (0..1023)
OPTIONAL,     -- Need S
      txConfig                                       ENUMERATED {codebook,
nonCodebook}                                          OPTIONAL,     -- Need S
      dmrs-UplinkForPUSCH-MappingTypeA              SetupRelease { DMRS-
UplinkConfig }                                        OPTIONAL,     -- Need M
      dmrs-UplinkForPUSCH-MappingTypeB              SetupRelease { DMRS-
UplinkConfig }                                        OPTIONAL,     -- Need M

      pusch-PowerControl                             PUSCH-PowerControl
OPTIONAL,     -- Need M
      frequencyHopping                               ENUMERATED {intraSlot, interSlot}
OPTIONAL,     -- Need S
      frequencyHoppingOffsetLists                   SEQUENCE (SIZE (1..4)) OF INTEGER
(1.. maxNrofPhysicalResourceBlocks-1)

OPTIONAL,     -- Need M
      resourceAllocation                             ENUMERATED
{ resourceAllocationType0, resourceAllocationType1, dynamicSwitch},
      pusch-TimeDomainAllocationList                SetupRelease { PUSCH-
```

```
TimeDomainResourceAllocationList }                    OPTIONAL,      -- Need M
      pusch-AggregationFactor                        ENUMERATED { n2, n4, n8 }
OPTIONAL,      -- Need S
      mcs-Table                                      ENUMERATED {qam256,
qam64LowSE}                                                  OPTIONAL,      -- Need S
      mcs-TableTransformPrecoder                     ENUMERATED {qam256,
qam64LowSE}                                                  OPTIONAL,      -- Need S
      transformPrecoder                              ENUMERATED {enabled, disabled}
OPTIONAL,      -- Need S
      codebookSubset                                 ENUMERATED
{fullyAndPartialAndNonCoherent, partialAndNonCoherent,nonCoherent}

OPTIONAL, -- Cond codebookBased
      maxRank                                        INTEGER (1..4)
OPTIONAL, -- Cond codebookBased
      rbg-Size                                       ENUMERATED { config2}
OPTIONAL, -- Need S
      uci-OnPUSCH                                    SetupRelease { UCI-OnPUSCH}
OPTIONAL, -- Need M
      tp-pi2BPSK                                     ENUMERATED {enabled}
OPTIONAL, -- Need S
      ...
}
```

Next, codebook-based PUSCH transmission will be described. The codebook-based PUSCH transmission may be dynamically scheduled through DCI format 0_0 or 0_1, and may operate semi-statically by a configured grant. When the codebook-based PUSCH is dynamically scheduled by DCI format 0_1 or is configured semi-statically by a configured grant, the UE determines a precoder for PUSCH transmission based on an SRS resource indicator (SRI), a transmission precoding matrix indicator (TPMI), and a transmission rank (the number of PUSCH transport layers).

Here, the SRI may be given through a field SRS resource indicator in DCI or may be configured through srs-ResourceIndicator, which is higher layer signaling. The UE is configured with at least one SRS resource when transmitting a codebook-based PUSCH, and may be configured with up to two SRS resources. When the UE is provided with an SRI through DCI, the SRS resource indicated by the corresponding SRI denotes an SRS resource corresponding to the SRI among SRS resources transmitted before the PDCCH including the corresponding SRI. In addition, TPMI and transmission rank may be given through field precoding information and number of layers in DCI, or may be configured through precodingAndNumberOfLayers, which is higher layer signaling. TPMI is used to indicate a precoder applied to PUSCH transmission. If the UE is configured with one SRS resource, the TPMI is used to indicate a precoder to be applied in the configured one SRS resource. If the UE is configured with multiple SRS resources, the TPMI is used to indicate a precoder to be applied in the SRS resource indicated through the SRI.

A precoder to be used for PUSCH transmission is selected from an uplink codebook having the same number of antenna ports as the value of nrofSRS-Ports in SRS-Config, which is higher layer signaling. In codebook-based PUSCH transmission, the UE determines a codebook subset based on the TPMI and codebookSubset in pusch-Config, which is higher layer signaling. CodebookSubset in pusch-Config, which is higher layer signaling, may be configured with one of 'fullyAndPartialAndNonCoherent', 'partialAndNonCoherent', or 'nonCoherent' based on the UE capability reported by the UE to the base station. If the UE reports 'partialAndNonCoherent' as UE capability, the UE does not expect that the value of codebookSubset, which is higher layer signaling, is configured to be 'fullyAndPartialAndNonCoherent'. In addition, if the UE reports 'nonCoherent' as UE capability, the UE does not expect that the value of codebookSubset, which is higher layer signaling, is configured to be 'fullyAndPartialAndNonCoherent' or 'partialAndNonCoherent'. When nrofSRS-Ports in SRS-ResourceSet, which is higher layer signaling, indicates two SRS antenna ports, the UE does not expect that the value of codebookSubset, which is higher layer signaling, is configured to be 'partialAndNonCoherent'.

The UE may be configured with one SRS resource set in which the value of usage in the SRS-ResourceSet, which is higher layer signaling, is configured to be 'codebook', and one SRS resource in the corresponding SRS resource set may be indicated through SRI. If multiple SRS resources are configured in the SRS resource set in which the usage value in the SRS-ResourceSet, which is higher layer signaling, is configured to be 'codebook', the UE expects that the values of nrofSRS-Ports in the SRS-Resource, which is higher layer signaling, are configured to be the same value with respect to all SRS resources.

The UE transmits, to the base station, one or multiple SRS resources included in the SRS resource set in which the value of usage is configured to be 'codebook' according to higher layer signaling, and the base station indicates the UE to perform PUSCH transmission by selecting one of the SRS resources transmitted by the UE and using transmission beam information of the corresponding SRS resource. Here, in the codebook-based PUSCH transmission, the SRI is used as information for selection of the index of one SRS resource and is included in the DCI. Additionally, the base station includes, in the DCI, information indicating a rank and a TPMI to be used by the UE for PUSCH transmission. The UE performs PUSCH transmission by using the SRS resource indicated by the SRI and applying a rank indicated based on the transmission beam of the SRS resource and a precoder indicated by the TPMI.

Next, non-codebook-based PUSCH transmission will be described. Non-codebook-based PUSCH transmission may be dynamically scheduled through DCI format 0_0 or 0_1, and may be semi-statically operated by a configured grant. When at least one SRS resource is configured in the SRS resource set in which the value of usage in the SRS-ResourceSet, which is higher layer signaling, is configured to be 'nonCodebook', the UE may be scheduled with non-codebook-based PUSCH transmission through DCI format 0_1.

For the SRS resource set in which the value of usage in the SRS-ResourceSet, which is higher layer signaling, is configured to be 'nonCodebook', the UE may be configured with one connected non-zero power CSI-RS (NZP CSI-RS) resource. The UE may perform calculation of the precoder for SRS transmission by measuring the NZP CSI-RS resource connected to the SRS resource set. If the difference between the last received symbol of the aperiodic NZP CSI-RS resource connected to the SRS resource set and the first symbol of aperiodic SRS transmission in the UE is less than 42 symbols, the UE does not expect information on the precoder for SRS transmission to be updated.

When the value of resource Type in the SRS-ResourceSet, which is higher layer signaling, is configured to be 'aperiodic', the connected NZP CSI-RS is indicated by SRS request, which is a field in DCI format 0_1 or 1_1. Here, if the connected NZP CSI-RS resource is an aperiodic NZP CSI-RS resource, the connected NZP CSI-RS exists when the value of the SRS request field in DCI format 0_1 or 1_1 is not '00'. In this case, the DCI should not indicate cross carrier or cross BWP scheduling. In addition, if the value of the SRS request indicates the existence of the NZP CSI-RS, the corresponding NZP CSI-RS is located in a slot in which a PDCCH including the SRS request field is transmitted. Here, TCI states configured via the scheduled subcarrier are not configured to be QCL-TypeD.

If a periodic or semi-persistent SRS resource set is configured, the connected NZP CSI-RS may be indicated through associated CSI-RS in the SRS-ResourceSet, which is higher layer signaling. For non-codebook-based transmission, the UE does not expect that spatialRelation Info, which is higher layer signaling for SRS resource, and associated CSI-RS in SRS-ResourceSet, which is higher layer signaling, are configured together.

When the UE is configured with multiple SRS resources, the UE may determine a precoder to be applied to PUSCH transmission and a transmission rank, based on the SRI indicated by the base station. Here, the SRI may be indicated through a field SRS resource indicator in DCI or may be configured through srs-ResourceIndicator, which is higher layer signaling. As in the above-described codebook-based PUSCH transmission, when the UE is provided with an SRI through DCI, an SRS resource indicated by the SRI denotes an SRS resource corresponding to the SRI among SRS resources transmitted before the PDCCH including the SRI. The UE may use one or multiple SRS resources for SRS transmission, and the maximum number of SRS resources that can be simultaneously transmitted in the same symbol in one SRS resource set are determined by UE capability reported by the UE to the base station. Here, the SRS resources simultaneously transmitted by the UE occupy the same RB. The UE configures one SRS port for each SRS resource. Only one SRS resource set in which the value of usage in the SRS-ResourceSet, which is higher layer signaling, is configured to be 'nonCodebook' can be configured, and up to four SRS resources for non-codebook-based PUSCH transmission can be configured.

The base station transmits one NZP-CSI-RS connected to the SRS resource set to the UE, and the UE performs calculation of a precoder to be used for transmission of one or multiple SRS resources in the corresponding SRS resource set based on a result of measurement at the time of reception of the NZP-CSI-RS. The UE applies, to the base station, the calculated precoder when transmitting one or multiple SRS resources in the SRS resource set in which usage is configured to be 'nonCodebook', and the base station selects one or multiple SRS resources among the received one or multiple SRS resources. In this case, in non-codebook-based PUSCH transmission, the SRI indicates an index capable of expressing one or a combination of multiple SRS resources, and the SRI is included in the DCI. Here, the number of SRS resources indicated by the SRI transmitted by the base station may be the number of transmission layers of the PUSCH, and the UE performs PUSCH transmission by applying a precoder applied for SRS resource transmission to each layer.

[CA/DC Related]

FIG. 10 is a diagram illustrating radio protocol structures of a base station and a UE in a single cell, carrier aggregation, and dual connectivity situation in a wireless communication system according to an embodiment of the disclosure.

With reference to FIG. 10, the radio protocol of the next generation mobile communication system includes, for each of a UE and an NR base station, NR service data adaptation protocols (NR SDAPs) S25 and S70, NR packet data convergence protocols (NR PDCPs) S30 and S65, NR radio link controls (NR RLCs) S35 and S60, and NR medium access control (NR MACs) S40 and S55.

The functions of the NR SPAPs S25 and S70 may include some of the following functions:

- Transfer of user plane data
- Mapping between a quality of service (QoS) flow and a data bearer (DRB) for both DL and UL
- Marking QoS flow ID in both DL and UL packets
- Reflective QoS flow to DRB mapping for the UL SDAP PDUs

For the SDAP layer device, the UE may be configured, via an RRC message, about whether to use a header of the SDAP layer device or whether to use a function of the SDAP layer device, according to each PDCP layer device, each bearer, or each logical channel. If the SDAP header is configured, the UE may be indicated by a one-bit NAS reflective QoS indicator (NAS reflective QoS) and a one-bit AS reflective QoS indicator (AS reflective QoS) of the SDAP header to update or reconfigure mapping information between a data bearer and a QoS flow of uplink and downlink. The SDAP header may include QoS flow ID information indicating QoS. The QoS information may be used as a data processing priority for supporting smooth services, scheduling information, or the like.

The functions of the NR PDCPs S30 and S65 may include some of the following functions:

- Header compression and decompression: robust header compression (ROHC) only
- Transfer of user data
- In-sequence delivery of higher layer PDUs
- Out-of-sequence delivery of higher layer PDUs
- PDCP PDU reordering for reception
- Duplicate detection of lower layer service data units (SDUs)
- Retransmission of PDCP SDUs
- Ciphering and deciphering
- Timer-based SDU discard in uplink

In the above, a reordering function of the NR PDCP device refers to a function of sequentially reordering PDCP PDUs, received from a lower layer, based on a PDCP sequence number (SN), and may include a function of transmitting data to a higher layer in the sequence of reordering. Alternatively, the reordering function of the NR PDCP device may include a function of transmitting data without considering the sequence, a function of reordering the sequence and recording missing PDCP PDUs, a function of providing a state report on the missing PDCP PDUs to a transmission side, and a function of requesting retransmission for the missing PDCP PDUs.

The functions of the NR RLCs S35 and S60 may include some of the following functions:

- Transfer of upper layer PDUs
- In-sequence delivery of higher layer PDUs
- Out-of-sequence delivery of higher layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery function of the NR RLC device refers to a function of transmitting RLC SDUs, received from a lower layer, to a higher layer in the sequence of reception. The in-sequence delivery function of the NR RLC device may include a function of, if originally one RLC SDU is segmented into multiple RLC SDUs and received, reassembling and transmitting the multiple RLC SDUs, a function of reordering the received RLC PDUs based on an RLC SN or PDCP SN, a function of reordering the sequence and recording missing RLC PDUs, a function of providing a state report on the missing RLC PDUs to a transmission side, and a function of requesting retransmission for the missing RLC PDUs. If the missing RLC SDU occurs, the in-sequence delivery function of the NR RLC device may include a function of sequentially transmitting only the RLC SDUs prior to the missing RLC SDU to a higher layer or sequentially transmitting all the RLC SDUs received before a timer starts to a higher layer if a predetermined timer expires although there is a missing RLC SDU. Alternatively, the in-sequence delivery function of the NR RLC device may include a function of sequentially transmitting all RLC SDUs received so far to a higher layer if a predetermined timer expires although there is a missing RLC SDU. In addition, the RLC PDUs may be processed in the sequence that the RLC PDUS are received (in the sequence of arrival regardless of the sequence of serial number and sequence number), and may be transmitted to a PDCP device out of sequence delivery. In a case of segments, the in-sequence delivery function may include a function of receiving segments stored in a buffer or segments to be received later, reconfiguring the segments in one complete RLC PDU, processing the RLC PDU, and transmitting the RLC PDU to the PDCP device. The NR RLC layer may not include a concatenation function, and the concatenation function may be performed by the NR MAC layer or may be replaced by a multiplexing function of the NR MAC layer.

In the above, the out-of-sequence delivery function of the NR RLC device refers to a function of directly transmitting the RLC SDUs, received from the lower layer, to a higher layer regardless of the order, and may include, if originally one RLC SDU is segmented into multiple RLC SDUs and received, a function of reassembling the multiple RLC SDUs and transmitting the same, and a function of storing the RLC SNs or PDCP SNs of the received RLC PDUs, reordering the sequence, and recording the missing RLC PDUs.

The NR MACs S40 and S55 may be connected to multiple NR RLC layer devices configured in one UE, and functions of the NR MAC may include some of the following functions:

- Mapping between logical channels and transport channels
- Multiplexing/de-multiplexing of MAC SDUs
- Scheduling information reporting
- Error correction through HARQ
- Priority handling between logical channels of one UE
- Priority handling between UEs by means of dynamic scheduling
- Multimedia broadcast service (MBMS) identification
- Transport format selection
- Padding

The NR PHY layers S45 and S50 may perform an operation of channel-coding and modulating higher layer data, generating the higher layer data into an OFDM symbol, transmitting the OFDM symbols via a radio channel, or demodulating and channel decoding of the OFDM symbols received via the radio channel, and transferring the OFDM symbol to a higher layer.

The detailed structure of the above-described radio protocol structure may be variously changed according to a carrier (or cell) management method. For example, when the base station performs single carrier (or cell)-based data transmission to the UE, the base station and the UE use a protocol structure, which has a single structure for each layer, such as S00. On the other hand, when the base station transmits data to the UE based on carrier aggregation (CA) using multiple carriers in a single TRP, the base station and the UE has a single structure up to RLC but uses a protocol structure of multiplexing a PHY layer through a MAC layer, such as S 10. As another example, when the base station transmits data to the UE based on dual connectivity (DC) using multiple carriers in multiple TRP, the base station and the UE have a single structure up to RLC, but use a protocol structure of multiplexing a PHY layer through a MAC layer, such as S20.

Referring to the above descriptions related to PDCCH and beam configuration, since PDCCH repetitive transmission is not currently supported in Rel-15 and Rel-16 NRs, it is difficult to achieve the required reliability in scenarios requiring high reliability, such as URLLC. The disclosure proposes a method for improving PDCCH reception reliability of a UE by providing a PDCCH repetitive transmission method through multiple transmission points (TRP). Specific methods are described in detail in the following embodiments.

Now, embodiments of the disclosure will be described in detail with the accompanying drawings. The disclosure is applicable to both FDD and TDD systems. Hereinafter, in the disclosure, higher signaling (or higher layer signaling) is a signal transmission method in which data is transmitted from a base station to a UE using a downlink data channel of a physical layer or transmitted from a UE to a base station using an uplink data channel of a physical layer, and may be referred to as RRC signaling, PDCP signaling, or medium access control (MAC) control element (CE) (MAC CE).

In determining whether to apply coordinated communication, a UE may use various methods such as a method in which PDCCH(s) for allocating PDSCH to which coordinated communication is applied has a specific format, a method in which the PDCCH(s) for allocating PDSCH to which coordinated communication is applied includes a specific indicator for informing whether coordinated communication is applied, a method in which the PDCCH(s) for allocating PDSCH to which coordinated communication is applied is scrambled by a specific RNTI, or a method in which it is assumed that coordinated communication is applied in a specific section indicated by a higher layer. Hereinafter, for convenience of description, a case in which a UE receives a PDSCH to which coordinated communication is applied based on conditions similar to the above will be referred to as an NC-JT case.

Hereinafter, determining a priority between A and B refers to selecting one having a higher priority according to a predetermined priority rule to perform an operation corresponding thereto or omitting (or dropping) an operation for the other one having a lower priority.

Hereinafter, the above examples will be described through a plurality of embodiments, but they are not independent, and such embodiments can be applied at the same time or in combination.

Hereinafter, embodiments of the disclosure will be described in detail with reference to the accompanying drawings. In the disclosure, the base station, as a subject performing resource allocation of a terminal, may be at least one of gNode B, gNB, eNode B, Node B, BS, radio access unit, base station controller, or node on a network. The terminal may include a UE, an MS, a cellular phone, a smartphone, a computer, or a multimedia system capable of performing a communication function. Hereinafter, an embodiment will be described using a 5G system as an example, but the embodiment may be applied to other communication systems having a similar technical background or channel type. For example, LTE or LTE-A mobile communication and mobile communication technology developed after 5G may be included therein. Accordingly, the embodiments may be applied to other communication systems through some modifications within a range that does not significantly depart from the scope of the disclosure as determined by those of ordinary skilled in the art. The contents of the disclosure are applicable to FDD and TDD systems.

In addition, in the description of the disclosure, if it is determined that a detailed description of a related function or configuration may unnecessarily obscure the subject matter of the disclosure, the detailed description thereof will be omitted. In addition, the terms to be described later are terms defined considering functions in the disclosure, which may vary according to intentions or customs of users and operators. Therefore, the definition should be made based on the entire description herein.

Hereinafter, higher layer signaling may be signaling corresponding to at least one or a combination of one or more of the following signaling.

- Master information block (MIB)
- System information block (SIB) or SIB X (X=1, 2, ...)
- Radio resource control (RRC)
- Medium access control (MAC) control element (CE)

In addition, L1 signaling may be signaling corresponding to at least one or a combination of one or more of signaling methods using the following physical layer channel or signaling.

- Physical downlink control channel (PDCCH)
- Downlink control information (DCI)
- UE-specific DCI
- Group common DCI
- Common DCI
- Scheduling DCI (for example, DCI used for scheduling downlink or uplink data)
- Non-scheduling DCI (for example, DCI not for the purpose of scheduling downlink or uplink data)
- Physical uplink control channel (PUCCH)
- Uplink control information (UCI)

In the disclosure, determining a priority between A and B refers to selecting one having a higher priority according to a predetermined priority rule to perform an operation corresponding thereto or omitting (or dropping) an operation for the other one having a lower priority.

In the following description, the above examples will be described through a plurality of embodiments, but they are not independent, and such embodiments can be applied at the same time or in combination.

[Random Access Procedure in SBFD]

Meanwhile, 3GPP is discussing Subband non-overlapping Full Duplex (SBFD) as a new duplex scheme based on NR. SBFD is a technology that utilizes a part of downlink resources as uplink resources in a TDD band (spectrum) of frequencies below 6 GHz or above 6 GHz, expands the uplink coverage of the UE by allowing reception of uplink transmissions from the UE as much as the increased uplink resources, and reduces feedback delay by allowing reception of feedback on downlink transmission from the UE in the expanded uplink resources. In the disclosure, the UE that receives information on whether SBFD is supported from the base station and can perform uplink transmission in a part of downlink resources may be conveniently referred to as an SBFD UE (SBFD-capable UE). In order to define the SBFD scheme in the standard and allow the SBFD UE to determine that SBFD is supported in a specific cell (or frequency, frequency band), the following schemes may be considered.

First scheme. In addition to the existing frame structure type of unpaired spectrum (or time division duplex, TDD) or paired spectrum (or frequency division duplex, FDD), another frame structure type (e.g., frame structure type 2) may be introduced to define the above SBFD. The frame structure type 2 may be defined to be supported in the specific frequency or frequency band, or the base station may indicate to the UE whether SBFD is supported via system information. The SBFD UE may receive the system information containing whether SBFD is supported, and determine whether SBFD is supported in the specific cell (or frequency, frequency band).

Second scheme. Without defining a new frame structure type, whether SBFD is additionally supported in a specific frequency or frequency band of the existing unpaired spectrum (or TDD) may be indicated. In the second scheme, whether SBFD is additionally supported in a specific frequency or frequency band of the existing unpaired spectrum may be defined, or the base station may indicate to the UE whether SBFD is supported via system information. The SBFD UE may receive the system information containing whether SBFD is supported, and determine whether SBFD is supported in the specific cell (or frequency, frequency band).

In the first and second schemes, information on whether SBFD is supported may be information (e.g., SBFD resource configuration information in FIG. 12 to be described below) that indirectly indicates whether SBFD is supported by further configuring a part of downlink resources as uplink resources in addition to TDD uplink (UL)-downlink (DL) resource configuration information indicating downlink slot (or symbol) resources and uplink slot (or symbol) resources of TDD, or may be information that directly indicates whether SBFD is supported.

In the disclosure, the SBFD UE may obtain cell synchronization by receiving a synchronization signal block in the initial cell access for accessing a cell (or base station). The process of obtaining the cell synchronization may be the same for the SBFD UE and the existing TDD UE. Thereafter, through a MIB acquisition process, a SIB acquisition process, or a random access process, the SBFD UE may determine whether the cell supports SBFD.

System information for transmitting information on whether the SBFD is supported may be system information transmitted separately from system information for the UE (e.g., the existing TDD UE) supporting a different version of the standard within the cell, and the SBFD UE may determine whether SBFD is supported by obtaining all or part of the system information transmitted separately from the system information for the existing TDD UE. If the SBFD UE obtains only the system information for the existing TDD UE or obtains system information on SBFD non-support, it may determine that the cell (or base station) supports TDD only.

If information on whether SBFD is supported is included in the system information for the UE (e.g., the existing TDD UE) supporting a different version of the standard, the information on whether SBFD is supported may be inserted at the very end so as not to affect the acquisition of system information by the existing TDD UE. If the SBFD UE fails to obtain the inserted information on whether the SBFD is supported, or obtains information that SBFD is not supported, the SBFD UE may determine that the cell (or base station) supports TDD only.

If information on whether SBFD is supported is included in the system information for the UE (e.g., the existing TDD UE) supporting a different version of the standard, the information on whether SBFD is supported may be transmitted via a separate PDSCH so as not to affect the acquisition of system information by the existing TDD UE. That is, a UE that does not support SBFD may receive a first SIB (or SIB1) including the existing TDD-related system information in a first PDSCH. A UE that supports SBFD may receive the first SIB (or SIB1) including the existing TDD-related system information in the first PDSCH, and may receive a second SIB including SBFD-related system information in a second PDSCH. Here, the first PDSCH and the second PDSCH may be scheduled through a first PDCCH and a second PDCCH, and the cyclic redundancy codes (CRCs) of the first and second PDCCHs may be scrambled with the same RNTI (e.g., SI-RNTI). A search space for monitoring of the second PDCCH may be acquired from the system information of the first PDSCH, and if not acquired (i.e., if the system information of the first PDSCH does not include information on the search space), the second PDCCH may be received in the same search space as that of the first PDCCH.

When the SBFD UE determines that the cell (or base station) supports only TDD as described above, the SBFD UE may perform the random access procedure and the transmission/reception of data/control signals in the same manner as the existing TDD UE.

The base station may configure separate random access resources for each of the existing TDD UE and the SBFD UE (e.g., the SBFD UE supporting duplex communication and the SBFD UE supporting half-duplex communication), and transmit configuration information (control information or configuration information indicating time-frequency resources that can be used for PRACH) for the random access resources to the SBFD UE through system information. The system information for transmitting information for the random access resources may be separately transmitted system information that is distinguished from system information for the UE (e.g., the existing TDD UE) supporting a different version of the standard within a cell.

The base station may configure separate random access resources for the TDD UE supporting a different version of the standard and the SBFD UE and thereby distinguish whether the TDD UE supporting a different version of the standard performs random access or the SBFD UE performs random access. For example, a random access resource separately configured for the SBFD UE may be a resource that the existing TDD UE determines to be a downlink time resource, and the SBFD UE may perform random access through an uplink resource (or a separate random access resource) configured in a certain frequency of the downlink time resource, so that the base station may determine that the UE attempting random access through the uplink resource is the SBFD UE.

Alternatively, instead of configuring a separate random access resource for the SBFD UE, the base station may configure a common random access resource for all UEs in the cell. In this case, configuration information for the random access resource may be transmitted to all UEs in the cell through system information, and the SBFD UE that receives the system information may perform random access to the random access resource. Thereafter, the SBFD UE may complete the random access process and proceed to the RRC connected mode for transmitting and receiving data with the cell. After the RRC connected mode, the SBFD UE may receive from the base station an upper or physical signal indicating that some frequency resources of the downlink time resources are configured as uplink resources, and then perform an SBFD operation, for example, an operation of transmitting an uplink signal in the uplink resource.

In the case of determining that the cell supports SBFD, the SBFD UE may transmit capability information, to the base station, including at least one or more of whether the UE supports SBFD, whether full-duplex communication or half-duplex communication is supported, and the number of transmit or receive antennas equipped (or supported), thereby notifying the base station that the UE attempting to access is the SBFD UE. Alternatively, if half-duplex communication support is a mandatory implementation for the SBFD UE, whether half-duplex communication is supported may be omitted from the capability information. The SBFD UE's report on the capability information may be sent to the base station through the random access procedure, after the random access procedure is completed, or after transition to the RRC connected mode for transmitting and receiving data with the cell.

The SBFD UE may support half-duplex communication that performs only uplink transmission or downlink reception at one time like the existing TDD UE, or may support full-duplex communication that performs both uplink transmission and downlink reception at one time. Therefore, whether the half-duplex communication or the full-duplex communication is supported may be reported to the base station by the SBFD UE through a capability report, and after the report, the base station may configured to the SBFD UE about whether the SBFD UE will perform transmission/reception using half-duplex communication or full-duplex communication. In the case where the SBFD UE reports the capability for the half-duplex communication to the base station, since a duplexer generally does not exist, a switching gap may be required to change RF between transmission and reception when operating in FDD or TDD.

In general, the UE may form a radio link with a network through a random access procedure based on synchronization with the network and system information acquired during a cell search process. Random access may use a contention-based or non-contention-based (contention-free) scheme. The contention-based random access may be used when a UE performs cell selection and reselection during the initial access step of a cell, for example, when moving from the RRC_IDLE (RRC idle) state to the RRC_CONNECTED (RRC connected) state. The contention-free random access may be used to re-establish uplink synchronization when downlink data arrives, in the case of a handover, or in the case of position measurement.

FIG. 11 is a diagram illustrating a random access procedure in an embodiment of the disclosure.

In FIG. 11, a contention-based random access procedure is shown as an example. In addition, although not shown, the base station may transmit a synchronization signal block as described in the above embodiments. In this case, the base station may periodically transmit the synchronization signal block using beam sweeping. For example, the base station may transmit the synchronization signal block including a PSS/SSS (synchronization signal) and a PBCH (broadcast channel) signal using up to 64 different beams for 5 ms, and a plurality of synchronization signal blocks may be transmitted using different beams. The UE may detect (select) a synchronization signal block having an optimal beam direction (e.g., a beam direction in which the received signal strength is the strongest or greater than a predetermined threshold), and transmit a preamble using a physical random access channel (PRACH) resource related to the detected synchronization signal block. For example, in a first step 1101 of the random access procedure, the UE may transmit a random access preamble (or message 1) to the base station. The base station receiving the random access preamble may measure a transmission delay value between the UE and the base station and synchronize uplink. Specifically, the UE may transmit the random access preamble selected randomly from a random access preamble set given in advance by system information. The initial transmission power of the random access preamble may be determined according to a path loss between the base station and the UE measured by the UE. Additionally, the UE may determine a transmission beam direction (or transmission beam or beam) of the random access preamble based on the synchronization signal block received from the base station and transmit the random access preamble by applying the determined transmission beam direction.

In a second step 1102, the base station may transmit a response (random access response (RAR) or message 2) to the UE for the detected random access attempt. The base station may transmit an uplink transmission timing control command to the UE based on a transmission delay value measured from the random access preamble received in the first step. In addition, the base station may transmit an uplink resource and power control command to be used by the UE as scheduling information. The scheduling information may include control information for an uplink transmission beam of the UE. The RAR may be transmitted through a PDSCH and may include at least one of the following information.

- Random access preamble sequence index detected by the network (or base station)
- TC-RNTI (temporary cell radio network temporary identifier)
- Uplink scheduling grant
- Timing advance value

If the UE fails to receive the RAR, which is scheduling information for message 3, from the base station for a predetermined period of time in the second step 1102, the UE may perform the first step 1101 again. In this case, the UE increases the transmission power of the random access preamble by a predetermined step and transmits it (this is called power ramping), thereby increasing the probability of the base station receiving the random access preamble.

In a third step 1103, the UE may transmit uplink information (scheduled transmission or message 3) including a UE identifier (which may be referred to as UE contention resolution identity) (or a valid UE identifier (C-RNTI) if the UE already has it within a cell before initiating the random access procedure) to the base station through a physical uplink shared channel (PUSCH) using the uplink resources allocated in the second step 1102. The transmission timing of the uplink data channel for transmitting message 3 may follow the uplink transmission timing control command received from the base station in the second step 1102. In addition, the transmission power of the uplink data channel for transmitting message 3 may be determined in consideration of the power control command received from the base station in the second step 1102 and the power ramping value of the random access preamble. The uplink data channel for transmitting the above message 3 may be the first uplink data signal that the UE transmits to the base station after transmitting the random access preamble.

Finally, in a fourth step 1104, if the base station determines that the UE has performed random access without collision with other UEs, the base station may transmit to the UE a message (contention resolution (CR) message or message 4) including the identifier of the UE that transmitted uplink data in the third step 1103. In relation to this, if multiple UEs receive the same TC-RNTI in the second step 1102, each of the multiple UEs receiving the same TC-RNTI may include its own UE identifier (UE contention resolution identity) in message 3 in the third step 1103 and transmit it to the base station, and then, for contention resolution, the base station may transmit message 4 (CR message) including one UE identifier among the identifiers of the multiple UEs. When the UE receives message 4 (CR message) including its own UE identifier from the base station in the fourth step 1104 (or transmits message 3 including a UE identifier (C-RNTI) in the third step 1103 and then receives UE-specific control information including CRC based on the UE identifier (C-RNTI) through PDCCH in the fourth step 1104), the UE may determine that random access is successful. Therefore, among multiple UEs that have received the same TC-RNTI from the base station, a UE that confirms that its UE identifier is included in message 4 (CR message) may know that the contention is successful. In addition, the UE may transmit a HARQ-ACK/NACK signal indicating whether message 4 has been successfully received, to the base station through a physical uplink control channel (PUCCH).

If data transmitted by the UE in the third step 1103 collides with data from another UE and thus the base station fails to receive a data signal from the UE, the base station may not perform any more data transmission to the UE. Therefore, if the UE fails to receive data transmitted from the base station in the fourth step 1104 for a certain period of time, the UE may determine that the random access procedure has failed, and may restart from the first step 1101.

As described above, in the first step 1101 of the random access procedure, the UE may transmit the random access preamble on the PRACH. There are 64 available preamble sequences in each cell, and four long preamble formats and nine short preamble formats may be used depending on the transmission form. The UE generates 64 preamble sequences using a root sequence index and a cyclic shift value signaled with system information, and may randomly select one sequence to use as a preamble.

The base station may inform the UE of configuration information for random access resources, e.g., control information (or configuration information) indicating time-frequency resources that can be used for PRACH, by using at least one of SIB, higher layer signaling (RRC information), or DCI. The frequency resource for PRACH transmission may indicate the start RB point of transmission to the UE, and the number of RBs used may be determined according to the preamble format transmitted through PRACH and the applied subcarrier spacing. The time resource for PRACH transmission may indicate, through a PRACH configuration index (0 to 255), a preconfigured PRACH configuration period, a subframe index and start symbol including a PRACH transmission time point (which may be used interchangeably with a PRACH occasion or a transmission time), the number of PRACH occasions in a slot, and the like, as shown in Table 16 below. The UE may determine the validity of the PRACH occasions indicated by the PRACH configuration index, and determine only valid PRACH occasions as PRACH occasions capable of transmitting a random access preamble. Through the PRACH configuration index, the random access configuration information included in SIB, and the index of the SSB selected by the UE, the UE may check the time and frequency resources for transmitting the random access preamble and transmit the selected sequence as a preamble to the base station.

[Table 16]

| PRACH configuration Index | Preamble format | $n_{SFN}$ mod x = y | | Subframe number | Starting symbol | Number of PRACH slots within a subframe | number of time-domain PRACH occasions within a PRACH slot | PRACH duration |
|---|---|---|---|---|---|---|---|---|
| | | x | y | | | | | |
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| 5 | 0 | 8 | 1 | 4 | 0 | - | - | 0 |
| 6 | 0 | 8 | 1 | 7 | 0 | - | - | 0 |
| 7 | 0 | 8 | 1 | 9 | 0 | - | - | 0 |
| 8 | 0 | 4 | 1 | 1 | 0 | - | - | 0 |
| 9 | 0 | 4 | 1 | 4 | 0 | - | - | 0 |
| 10 | 0 | 4 | 1 | 7 | 0 | - | - | 0 |
| ... | ... | | | | | | | |
| 104 | A1 | 1 | 0 | 1,4,7 | 0 | 2 | 6 | 2 |
| ... | ... | | | | | | | |
| 251 | C | 1 | 0 | 2,7 | 0 | 2 | 2 | 6 |
| 252 | C2 | 1 | 0 | 1,4,7 | 0 | 2 | 2 | 6 |
| 253 | C2 | 1 | 0 | 0,2,4,6,8 | 0 | 2 | 2 | 6 |
| 254 | C2 | 1 | 0 | 0,1,2,3,4, 5,6,7,8,9 | 0 | 2 | 2 | 6 |
| 255 | C2 | 1 | 0 | 1,3,5,7,9 | 0 | 2 | 2 | 6 |

Meanwhile, according to an embodiment of the disclosure, in a scheme for the SBFD UE to determine the validity of the PRACH occasion through the PRACH configuration index for PRACH transmission and SBFD configuration, and to perform PRACH transmission through the PRACH occasion determined to be valid, a procedure of the SBFD UE is required when the valid PRACH occasion overlaps with downlink reception.

Therefore, a method for the SBFD UE to determine the validity of the PRACH occasion and, when the valid PRACH occasion and the downlink reception are configured or scheduled to occur simultaneously, an operation of the SBFD UE will be described using FIGS. 12 to 18.

FIG. 12 is a diagram illustrating an example of SBFD operation in a TDD band of a wireless communication system to which the disclosure is applied.

In (a) of FIG. 12, a case where TDD is operated in a specific frequency band is shown. In a cell where TDD is operated, the base station may transmit and receive, from and to the existing TDD UE or the SBFD UE, signals including data/control information in a downlink slot (or symbol), an uplink slot (or symbol) 1201, and a flexible slot (or symbol), based on configuration for TDD UL-DL resource configuration information indicating downlink slot (or symbol) resources and uplink slot (or symbol) resources of TDD.

It may be assumed in FIG. 12 that a DDDSU slot format is configured according to the TDD UL-DL resource configuration information. Here, 'D' is a slot composed entirely of downlink symbols, 'U' is a slot composed entirely of uplink symbols, and 'S' is a slot that is not 'D' nor 'U', that is, a slot that includes a downlink symbol or an uplink symbol or a flexible symbol. Here, for convenience, it may be assumed that S is composed of 12 downlink symbols and 2 flexible symbols. In addition, the DDDSU slot format may be repeated according to the TDD UL-DL resource configuration information. That is, the repetition period of the TDD configuration may be set to 5 slots (5 ms for 15 kHz SCS, 2.5 ms for 30 kHz SCS, etc.).

Next, in (b), (c) and (d) of FIG. 12, cases where SBFD is operated together with TDD in a specific frequency band are illustrated.

In (b) of FIG. 12, the UE may be configured with a partial band of frequencies of the cell as a frequency band 1210 in which uplink transmission is available. This band may be called an UL subband. The UL subband may be applied to all symbols of all slots. The UE may transmit an uplink channel or signal scheduled for all symbols 1212 in the UL subband. However, the UE may not transmit an uplink channel or signal in a band other than the UL subband.

In (c) of FIG. 12, the UE may be configured with a partial band of frequencies of the cell as a frequency band 1220 in which uplink transmission is available, and may be configured with a time region in which the frequency band is activated. Here, this frequency band may be called an UL subband. In (c) of FIG. 12, the UL subband is deactivated in the first slot, and the UL subband may be activated in the remaining slots. Therefore, the UE may transmit an uplink channel or signal in the UL subband 1222 of the remaining slots. Although the UL subband is activated in units of slots in this case, whether it is activated may be configured in units of symbols.

In (d) of FIG. 12, the UE may be configured with time-frequency resources in which uplink transmission is available. The UE may be configured with one or more time-frequency resources as time-frequency resources in which uplink transmission is available. For example, a partial frequency band 1232 of the first and second slots may be configured as time-frequency resources in which uplink transmission is available. Also, a partial frequency band 1233 of the third slot and a partial frequency band 1234 of the fourth slot may be configured as time-frequency resources in which uplink transmission is available.

In the following description, the time-frequency resources available for uplink transmission within a downlink symbol or slot may be referred to as SBFD resources.

Meanwhile, the base station may transmit PRACH configuration to the UE via system information, and RACH occasions may be configured according to the PRACH configuration. The UE may determine that all or some of the RACH occasions are valid.

In an FDD cell, all RACH occasions according to the PRACH configuration may be defined as valid. Here, the valid RACH occasions may be called valid RACH occasion (RO).

In a TDD cell, only the RACH occasion that satisfies the following conditions in the PRACH configuration may be considered valid.

- In the case where TDD DL/UL configuration information is not received in the system information, if an RACH occasion in the PRACH slot does not precede the SS/PBCH and starts after $N_{gap}$ symbols from the last reception symbol of the SS/PBCH, the RACH occasion may be determined to be valid.
- In the case where TDD DL/UL configuration information is received in the system information, if an RACH occasion in the UL symbol or an RACH occasion in the PRACH slot does not precede the SS/PBCH, starts after $N_{gap}$ symbols from the last reception symbol of the S S/PBCH, and starts after the last DL symbol, the RACH occasion may be determined to be valid.

FIG. 13 illustrates a valid RO in a TDD cell.

In (a) of FIG. 13, it is assumed that the UE receives DDDSU with TDD DL/UL configuration information and an RACH occasion is configured for each slot according to a PRACH configuration. The UE may determine that a PRACH configuration overlapping with a UL symbol is a valid RACH occasion. Here, the fifth slot (the last slot of the TDD period configured with DDDSU) is an uplink slot and an RACH occasion 1301 may be valid. However, RACH occasions of the first, second, third and fourth slots (first 4 slots of the TDD period configured with DDDSU) may not be valid because they do not start after the last downlink symbol. Therefore, the UE may determine that RACH occasions of four uplink slots (the fifth, tenth, fifteenth, and twentieth) within 20 slots are valid and RACH occasions of the remaining 16 slots are invalid.

In a first method of the disclosure, when the SBFD UE is configured with time-frequency resources for uplink transmission and SBFD uplink resources, the UE may determine the validity of the RACH occasion, as follows.

- In the case where TDD DL/UL configuration information is not received in the system information, if an RACH occasion in the PRACH slot does not precede the SS/PBCH and starts after $N_{gap}$ symbols from the last reception symbol of the SS/PBCH, the RACH occasion may be determined to be valid.
- In the case where TDD DL/UL configuration information is received in the system information, if an RACH occasion in the UL symbol or an RACH occasion in the PRACH slot does not precede the SS/PBCH and starts after $N_{gap}$ symbols from the last reception symbol of the SS/PBCH, and if the RACH occasion is located within the SBFD uplink resource, the RACH occasion may be determined to be valid.

That is, when comparing the validity of the RACH occasion of TDD, in the case where TDD DL/UL configuration information is received in the system information, the RACH occasions included in the SBFD uplink resource area within the DL symbol may be valid RACH occasions. Therefore, the UE may obtain more RACH occasions through the above method.

However, in the first method, the RACH occasion may not be valid depending on the location of the SS/PBCH. Furthermore, if the RACH occasion is configured in the SBFD uplink resource (a resource capable of uplink transmission), a problem may occur in which the RACH occasion is limited in the resource. This can be solved in a second method.

In the second method of the disclosure, when the SBFD UE is configured with time-frequency resources for uplink transmission and SBFD uplink resources, the UE may determine the validity of the RACH occasion, as follows.

- In the case where TDD DL/UL configuration information is not received in the system information, if an RACH occasion in the PRACH slot does not precede the SS/PBCH and starts after $N_{gap}$ symbols from the last reception symbol of the SS/PBCH, the RACH occasion may be determined to be valid.
- In the case where TDD DL/UL configuration information is received in the system information, if an RACH occasion in the UL symbol is located within the SBFD uplink resource, the RACH occasion may be determined to be valid.

In (b), (c) and (d) of FIG. 13, the UE may determine whether the RACH occasion is valid, based on TDD UL-DL resource configuration information and SBFD uplink resource information.

In (b) of FIG. 13, the UE may be configured with an UL subband, and the resource of the UL subband of the downlink symbol may be determined as an SBFD uplink resource. According to the first and second methods (there is no difference between the first and second methods since SS/PBCH is not shown in FIG. 14), the UE may determine that the RACH occasion is valid because the SBFD uplink resource of the preceding 4 slots in the TDD period includes the RACH occasion.

For reference, in (b) of FIG. 13, when the UL subband is configured, uplink transmission is available in the resources of the UL subband in all symbols. Therefore, the first and second methods may be briefly described as follows.

In the modified first method of the disclosure, when the SBFD UE is configured with time-frequency resources for uplink transmission and SBFD resources, the UE may determine the validity of the RACH occasion, as follows.

- If the frequency band of the RACH occasion configured according to the PRACH configuration is included in the UL subband, and if the RACH occasion in the PRACH slot does not precede the SS/PBCH and starts after $N_{gap}$ symbols from the last reception symbol of the SS/PBCH, the RACH occasion may be determined to be valid.

In the modified second method of the disclosure, when the SBFD UE is configured with time-frequency resources for uplink transmission and SBFD resources, the UE may determine the validity of the RACH occasion, as follows.

- If the frequency band of the RACH occasion configured according to the PRACH configuration is included in the UL subband, all RACH occasions may be valid.

In (c) of FIG. 13, the UE may be configured with the UL subband and a time region in which the uplink subband is activated, and the resource of the UL subband of the downlink symbol of the activated time region may be determined as the SBFD uplink resource. According to the first and second methods (there is no difference between the first and second methods since SS/PBCH is not shown in FIG. 13), the UE may determine that an RACH occasion 1321 is valid because the RACH occasion is included in the SBFD uplink resources of the second, third and fourth slots in the TDD period. For reference, an RACH occasion 1322 of the first slot in the TDD period may be determined to be invalid because it is not included in the SBFD uplink resource.

In (d) of FIG. 13, the UE may be configured with the time-frequency domain of the SBFD uplink resources, and according to the first and second methods (there is no difference between the first and second methods since SS/PBCH is not shown in FIG. 13), the UE may determine that RACH occasions overlapping with the SBFD uplink resources are valid. That is, because RACH occasions 1331 of the first and second slots in the TDD period may be valid because they are included in the SBFD uplink resources. However, RACH occasions 1332 of the third and fourth slots may not be valid because they are not included in the SBFD uplink resources.

Although not specifically mentioned in (b), (c) and (d) of FIG. 13, an RACH occasion overlapping with a UL symbol may always be valid. However, the UE may be configured with an SBFD downlink resource capable of DL transmission within a UL symbol. In this case, if the SBFD downlink resource overlaps with the RACH occasion, the RACH occasion may not be valid. In an alternative method, even if the SBFD downlink resource overlaps with the RACH occasion, the RACH occasion may be valid. That is, the SBFD downlink resource configured in the uplink symbol may be ignored when determining a valid RACH occasion.

The first and second methods described above may be used when one PRACH configuration is configured for a TDD UE (a UE other than the SBFD UE) and the SBFD UE. That is, based on one PRACH resource configuration, the TDD UE may determine a valid RACH occasion according to the method of the TDD cell (in (a) of FIG. 13), and the SBFD UE may determine a valid RACH occasion according to the first and second methods described above (in (b), (c) and (d) of FIG. 13).

In the 5G system, the UE may receive a synchronization signal block and be configured with a control resource set (CORESET) #0 (which may correspond to a control resource set having a control resource set index or identity (ID) of 0) and a search space #0 (which may correspond to a search space having a search space index or ID of 0) from the synchronization signal block. The UE may perform monitoring for the CORESET#0, assuming that the selected synchronization signal block and a demodulation reference signal (DMRS) transmitted in the CORESET#0 are quasi-co-located (QCLed). In addition, the UE may receive system information based on downlink control information transmitted in the CORESET#0. The UE may obtain PRACH related configuration information for random access from the received system information. The UE that obtains the PRACH related configuration information may transmit a preamble to the base station in the PRACH based on the index of the received synchronization signal block when performing random access (for example, when receiving a synchronization signal block having the corresponding index, the UE transmits a preamble in the PRACH using a transmission beam having a QCL relationship with a reception beam), and the base station that receives the preamble from the UE through the PRACH may obtain information about the index of the synchronization signal block selected (received) by the UE. When transmitting Msg2 (1102 in FIG. 11), the base station may transmit a PDCCH that schedules a Msg2 PDSCH, or the Msg2 PDSCH, using a transmission beam having the same QCL relationship as the synchronization signal block corresponding to the received PRACH. Therefore, the UE may receive the PDCCH that schedules the Msg2 PDSCH, or the Msg2 PDSCH, using the reception beam used when receiving the synchronization signal block corresponding to the selected (transmitted) PRACH.

The UE may receive information about mapping between the valid RACH occasion and the synchronization signal block from the base station. At this time, the configuration information is configured as the same value for all UEs in the cell, from SIB1. Based on the configuration information, the UE may determine the mapping between the valid RACH occasion and the synchronization signal block.

The indexes of valid RACH occasions may be given (assigned) sequentially, starting from 0. Each valid RACH occasion is assigned with a unique index, which may be mapped to an index of a synchronization signal block. In the disclosure, for convenience, it is assumed that valid RACH occasions are assigned with indexes in time order. For reference, if valid RACH occasions are configured in different frequency domains at the same time point, the indexes may be assigned first according to the frequency domain and then assigned in time order. Hereinafter, it is assumed that the meaning of 'it may be given' may include the meaning of 'it may be assigned'.

Based on the information about the mapping between the valid RACH occasion and the synchronization signal block, N valid RACH occasions may be mapped to one synchronization signal block, where N is 1 or a value greater than 1. In this case, the valid RACH occasions with indexes of 0, 1, ..., N-1 may be mapped to the synchronization signal block with index 0. In general, the valid RACH occasions with indexes of i*N, i*N+1, ..., (i+1)*N-1 may be mapped to the synchronization signal block with index i. (For example, i = 0, 1, 2 ...)

Based on the information about the mapping between the valid RACH occasion and the synchronization signal block, one valid RACH occasion may be mapped to M synchronization signal blocks, where M is 1 or a value greater than 1. In this case, the RACH occasion with an index of i may be mapped to the synchronization signal blocks with indexes of i*M, i*M+1, ..., (i+1)*M-1 (for example, i = 0, 1, 2 ...). In this case, the preambles of one RACH occasion are divided into M sets, and each set may be mapped to one synchronization signal block.

The problem to be solved in the disclosure is that the mapping between the valid RACH occasion and the synchronization signal block of the TDD UE (the UE other than the SBFD UE) may be different from the mapping between the valid RACH occasion and the synchronization signal block of the SBFD UE. Therefore, from the perspective of the base station, ambiguity may arise as to which synchronization signal block the received PRACH is mapped to.

FIG. 14 illustrates a valid RACH occasion and index of a TDD UE and a valid RACH occasion and index of an SBFD UE.

In (a) of FIG. 14, the TDD UE (the UE other than the SBFD UE) cannot receive SBFD uplink resource configuration information for the SBFD UE. Therefore, even if an SBFD uplink resource is configured in the cell, the TDD UE may determine a valid RACH occasion according to the existing method of the TDD cell. Accordingly, the RACH occasion of the last uplink slot in the TDD period may be valid, and the RACH occasions of the remaining slots may not be valid. The UE may determine 4 RACH occasions in 20 slots to be valid and assign a unique index to each RACH occasion. As mentioned above, the indexes may be assigned in time order. The index of the valid RACH occasion in the fifth slot may be 0, the index of the valid RACH occasion in the tenth slot may be 1, the index of the valid RACH occasion in the fifteenth slot may be 2, and the index of the valid RACH occasion in the twentieth slot may be 3.

The UE may be configured with N=2 as the information on mapping between the valid RACH occasion and the synchronization signal block from the base station. This may be common to both the TDD UE and the SBFD UE. That is, two valid RACH occasions may be mapped to one synchronization signal block. Specifically, valid RACH occasions with indexes of 0 and 1 may be mapped to a synchronization signal block 1401 with index 0. Valid RACH occasions with indexes of 2 and 3 may be mapped to a synchronization signal block 1402 with index 1.

In (b) of FIG. 14, the SBFD UE may receive SBFD uplink resource configuration information for the SBFD UE. Therefore, the SBFD UE may determine the valid RACH occasion according to the first or second method described above. Accordingly, the RACH occasions of the second, third, and fourth slots in the TDD period may be valid, and the RACH occasion of the first slot may not be valid. In addition, the fifth slot in the TDD period may be an uplink slot and the RACH occasion may be valid. Here, the fifth slot of the TDD period is a valid RACH occasion for both the TDD UE and the SBFD UE. The UE may determine 16 RACH occasions in 20 slots to be valid and assign a unique index to each RACH occasion. As mentioned above, the indexes may be assigned in time order. The index of a valid RACH occasion in the second slot may be 0, the index of a valid RACH occasion in the third slot may be 1, the index of a valid RACH occasion in the fourth slot may be 2, and the index of a valid RACH occasion in the fifth slot may be 3.

The UE may be configured with N=2 as the information on mapping between the valid RACH occasion and the synchronization signal block from the base station. This may be common to both the TDD UE and the SBFD UE. That is, two valid RACH occasions may be mapped to one synchronization signal block. Specifically, valid RACH occasions with indexes of 0 and 1 may be mapped to a synchronization signal block 1411 with index 0. Valid RACH occasions with indexes of 2 and 3 may be mapped to a synchronization signal block 1412 with index 1.

The TDD UE and the SBFD UE determine that the RACH occasion of the uplink slot in the TDD period is valid, but different indexes may be assigned to them. That is, as shown in (a) of FIG. 14, the index of the valid RACH occasion in the fifth slot in the case of the TDD UE is 0, but as shown in (b) of FIG. 14, the index of the valid RACH occasion in the fifth slot in the case of the SBFD UE is 3. Therefore, the TDD UE and the SBFD UE may assign different indexes to the same valid RACH occasion, and thus the indexes of the mapped synchronization signal blocks may be different. That is, as shown in (a) of FIG. 14, the TDD UE maps the valid RACH occasion of the fifth slot to the synchronization signal block having the index 0, but as shown in (b) of FIG. 14, the SBFD UE may map the valid RACH occasion of the fifth slot to the synchronization signal block having the index 1. In this case, even if the base station receives the PRACH preamble in the valid RACH occasion of the fifth slot, the base station cannot determine the index of the synchronization signal block mapped to the valid RACH occasion. A method for solving this problem is as follows.

Now, various embodiments of the disclosure are described. Each embodiment relates to a method for satisfying at least the following. In the case where the SBFD UE and the TDD UE determine the same valid RACH occasion, the index of the synchronization signal block mapped to the valid RACH occasion may be the same. Furthermore, in the case where the SBFD UE and the TDD UE determine the same valid RACH occasion, the index of the valid RACH occasion may be the same in the SBFD UE and the TDD UE.

<First Embodiment> Definition of a new valid RO index determination method

In the first embodiment of the disclosure, the SBFD UE may use a new valid RO index determination method. The new valid RO index determination method is a method of first assigning an index of a valid RACH occasion that both the TDD UE and the SBFD UE determine to be a valid RACH occasion, and then assigning an index of a valid RACH occasion that only the SBFD UE determines to be a valid RACH occasion.

FIG. 15 illustrates a method for determining a new valid RO index.

First, the SBFD UE may determine a valid RACH occasion that the TDD UE and the SBFD UE determine to be valid at the same time. Here, the RACH occasions of the fifth, tenth, fifteenth, and twentieth slots may be determined as valid RACH occasions. The UE may first assign indexes to the above four RACH occasions. Here, the index starts from 0 and may be assigned according to a predefined rule. The predefined rule may be as follows.

- First, valid RACH occasions configured to different frequency domains at the same time may be indexed in ascending order of frequency.
- Then, valid RACH occasions configured to different times may be indexed in ascending order of time.

In FIG. 15, it is assumed that there is only one valid RACH occasion at the same time, so the index of the valid RACH occasion in the fifth slot is 0, the index of the valid RACH occasion in the tenth slot is 1, the index of the valid RACH occasion in the fifteenth slot is 2, and the index of the valid RACH occasion in the fifth slot is 3.

The SBFD UE may assign the next index to a valid RACH occasion that only the SBFD UE determines as valid. That is, because the indexes have been previously assigned up to 3, the next indexes may be assigned sequentially from 4. Although indexes are assigned according to the previously determined rule, the index of the valid RACH occasion that has already been assigned may be maintained as it is. In FIG. 15, assuming that there is only one valid RACH occasion at the same time, the index of the valid RACH occasion in the second slot, which is the earliest in time among the valid RACH occasions that only the SBFD UE determines as valid, is 4, the index of the valid RACH occasion in the third slot is 5, and the index of the valid RACH occasion of the fourth slot is 6. In this way, the indexes of the remaining valid RACH occasions may also be assigned over time.

According to the first embodiment, the same index may be assigned to the valid RACH occasions that the TDD UE and the SBFD UE determine to be valid at the same time. As shown in FIG. 15, for the valid RACH occasions in the fifth, tenth, fifteenth, and twentieth slots, the TDD UE and the SBFD UE may equally assign the indexes of 0, 1, 2, and 3, respectively. Therefore, the index of the same synchronization signal block may be mapped to the valid RACH occasion that the TDD UE and the SBFD UE determine to be valid at the same time.

<Second Embodiment> Reuse of existing valid RO index determination and giving priority to valid RACH occasion index of TDD UE

In the second embodiment of the disclosure, the SBFD UE may determine the indexes of all valid RACH occasions by the existing index determination method of valid RACH occasions, and newly assign an index to a valid RACH occasion that the SBFD UE and the TDD UE determine to be equally valid.

First, the SBFD UE may determine the valid RACH occasion according to the method of the SBFD UE (for example, the first or second method described above), and assign a unique index to the valid RACH occasion. Here, the index starts from 0 and may be assigned according to a predefined rule. The predefined rule may be as follows.

- First, valid RACH occasions configured to different frequency domains at the same time may be indexed in ascending order of frequency.
- Then, valid RACH occasions configured to different times may be indexed in ascending order of time.

FIG. 16 is a diagram illustrating indexes of valid RACH occasions according to the second embodiment.

As shown in FIG. 16, the SBFD UE may determine the RACH occasions of 16 slots as valid RACH occasions, and may assign indexes from 0 to 15 to the valid RACH occasions.

The SBFD UE may determine the valid RACH occasion that the TDD UE and the SBFD UE determine as valid at the same time. Here, the RACH occasions of the fifth, tenth, fifteenth, and twentieth slots may be determined as valid RACH occasions. These valid RACH occasions may be newly assigned unique indexes. Here, the indexes may start from 0. In FIG. 16, the valid RACH occasions of the fifth, tenth, fifteenth, and twentieth slots may be assigned indexes of 0, 1, 2, and 3. Previously, indexes of 3, 7, 11, and 15 were assigned to the respective slots. However, the indexes may be assigned again as 0, 1, 2, and 3.

According to the second embodiment, the same index may be assigned to the valid RACH occasions that the TDD UE and the SBFD UE determine to be valid at the same time. As shown in FIG. 16, for the valid RACH occasions in the fifth, tenth, fifteenth, and twentieth slots, the TDD UE and the SBFD UE may equally assign the indexes of 0, 1, 2, and 3, respectively. Therefore, the index of the same synchronization signal block may be mapped to the valid RACH occasion that the TDD UE and the SBFD UE determine to be valid at the same time.

However, in the case of the second embodiment, some indexes are not assigned to some valid RACH occasions. For example, indexes 3, 7, 11, and 15 are unused indexes because new indexes are assigned. Therefore, the synchronization signal block connected to the above index may not have a valid RACH occasion corresponding to the index. So, a different number of valid RACH occasions may be mapped to each synchronization signal block.

<Third Embodiment> Method for individually determining valid RO indexes

In the third method of the disclosure, a unique index may be assigned to a valid RACH occasion that is determined to be equally valid by both the SBFD UE and the TDD UE, and separately, a unique index may be assigned to a valid RACH occasion that is determined to be valid only by the SBFD UE. In this case, the unique indexes may start from 0 and may be assigned according to a predefined rule. The predefined rule may be as follows.

- First, valid RACH occasions configured to different frequency domains at the same time may be indexed in ascending order of frequency.
- Then, valid RACH occasions configured to different times may be indexed in ascending order of time.

FIG. 17 is a diagram illustrating indexes of valid RACH occasions determined according to the third embodiment.

First, the SBFD UE may determine a valid RACH occasion that the TDD UE and the SBFD UE determine to be valid at the same time. Here, the RACH occasions of the fifth, tenth, fifteenth, and twentieth slots may be determined as valid RACH occasions. The UE may assign indexes to the above four RACH occasions. Here, the indexes start from 0 and may be assigned according to the previously determined rule. Therefore, the indexes of the valid RACH occasions of the fifth, tenth, fifteenth, and twentieth slots may be assigned as 0, 1, 2, and 3.

In addition, the SBFD UE may determine a valid RACH occasion that only the SBFD UE determines to be valid. Here, the valid RACH occasions of the second, third, fourth, seventh, eighth, ninth, twelfth, thirteenth, fourteenth, seventeenth, eighteenth, and nineteenth slots are valid RACH occasions that only the SBFD UE determines to be valid. Indexes may be assigned to the above valid RACH occasions again. Here, the indexes start from 0 and may be assigned according to the previously established rule. Therefore, the indexes of valid RACH occasions in the second, third, fourth, seventh, eighth, ninth, twelfth, thirteenth, fourteenth, seventeenth, eighteenth, and nineteenth slots may be assigned as 0, 1, 2, 3, 4, 5, 6, 7, 8, 9, 10, and 11.

According to the third embodiment, the same index may be assigned to the valid RACH occasions that the TDD UE and the SBFD UE determine to be valid at the same time. As shown in FIG. 17, for the valid RACH occasions in the fifth, tenth, fifteenth, and twentieth slots, the TDD UE and the SBFD UE may equally assign the indexes of 0, 1, 2, and 3, respectively. Therefore, the index of the same synchronization signal block may be mapped to the valid RACH occasion that the TDD UE and the SBFD UE determine to be valid at the same time.

However, in the case of the third embodiment, there may be multiple valid RACH occasions with the same index. As shown in FIG. 17, the valid RACH occasions with index 0 may be in the second slot and the fifth slot. This may be used as follows.

The TDD UE does not have a valid RACH occasion with the same index. Therefore, it always has one valid RACH occasion with one index, and may transmit a PRACH preamble in that RACH occasion.

The SBFD UE may have multiple valid RACH occasions with the same index. In this case, the SBFD UE may always transmit a PRACH preamble in a valid RACH occasion that is not used by the TDD UE. As shown in FIG. 17, the valid RACH occasions with an index of 0 are in the second slot and the fifth slot, but the valid RACH occasion of the fifth slot is a valid RACH occasion used by the TDD UE. Therefore, the SBFD UE may not transmit a PRACH preamble in that valid RACH occasion, but may transmit a PRACH preamble in the valid RACH occasion of the second slot with the same index.

When the same valid RACH occasion is shared and used by the TDD UE and the SBFD UE, the following advantages may be achieved. Upon receiving a PRACH preamble in a certain valid RACH occasion, the base station may determine whether the UE transmitting the PRACH preamble is the TDD UE or the SBFD UE. That is, because the SBFD UE always transmits a PRACH preamble in a valid RACH occasion that is not used by the TDD UE, it can be seen that a PRACH preamble received in the above valid RACH occasion is always a PRACH preamble transmitted by the SBFD UE. Therefore, the base station can schedule an uplink signal (e.g., msg3 PUSCH or PUCCH of msg4 PDSCH, etc.) to the SBFD UE in the SBFD uplink resource.

For reference, when the SBFD UE wants to operate like the TDD UE, it may transmit a PRACH preamble in a valid RACH occasion used by the TDD UE. In this case, although it is the SBFD UE, it can operate like the TDD UE. That is, it can be expected that an uplink signal (e.g., msg3 PUSCH or PUCCH of msg4 PDSCH, etc.) will not be scheduled in the SBFD uplink resource.

In the third embodiment, one PRACH configuration is commonly applied to the TDD UE and the SBFD UE. That is, the RACH occasion is determined equally for the TDD UE and the SBFD UE according to one PRACH configuration, the TDD UE determines the validity of the RACH occasion in the TDD cell method, and the SBFD UE determines the validity of the RACH occasion in the SBFD UE method. However, the base station may configure different PRACH configurations for the TDD UE and the SBFD UE. Because of different PRACH configurations, the index of the valid RACH occasion may be individually assigned for each configuration. Hereinafter, a detailed embodiment related to this will be described.

In the third-first embodiment of the disclosure, the base station may transmit two PRACH configurations to UEs in the cell via system information. Here, the first PRACH configuration may be a configuration for the TDD UE, and the second PRACH configuration may be a configuration for the SBFD UE. The TDD UE may receive the first PRACH configuration and determine RACH occasions based on the first PRACH configuration. The TDD UE may determine valid RACH occasions among the RACH occasions. At this time, the valid RACH occasions may be determined using the method of the TDD cell. The TDD UE may transmit a PRACH preamble in one RACH occasion among the valid RACH occasions.

The SBFD UE may receive the second PRACH configuration and determine RACH occasions based on the second PRACH configuration. The SBFD UE may determine valid RACH occasions among the RACH occasions. At this time, the valid RACH occasions may be determined using the method of the SBFD UE. The SBFD UE may transmit a PRACH preamble in one RACH occasion among the valid RACH occasions.

In this case, when the SBFD UE determines the valid RACH occasion, the following may be additionally considered.

- The SBFD UE may determine that the RACH occasion included in a UL symbol of the TDD UL-DL configuration is invalid. That is, a region including the UL symbol is determined to be not the SBFD uplink resource, and it can be assumed that there is no valid RACH occasion for the SBFD UE in the region.
- The SBFD UE may determine that the RACH occasion of a slot in which the TDD UE determines a valid RACH occasion is invalid. It can be assumed that the valid RACH occasion of the SBFD UE and the valid RACH occasion of the TDD UE do not overlap in one slot.

In the third-second embodiment of the disclosure, the base station may transmit two PRACH configurations to UEs in the cell via system information. Here, the first PRACH configuration may be a configuration for the TDD UE and the SBFD UE, and the second PRACH configuration may be a configuration for the SBFD UE. The TDD UE may receive the first PRACH configuration and determine RACH occasions based on the first PRACH configuration. The TDD UE may determine valid RACH occasions among the RACH occasions. At this time, the valid RACH occasions may be determined using the method of the TDD cell. The TDD UE may transmit a PRACH preamble in one RACH occasion among the valid RACH occasions.

The SBFD UE receives the first PRACH configuration and the second PRACH configuration. The SBFD UE may determine RACH occasions based on the first PRACH configuration. The SBFD UE may determine valid RACH occasions among the RACH occasions. At this time, the SBFD UE may determine the valid RACH occasions using the method of the TDD cell. The SBFD UE may determine RACH occasions based on the second PRACH configuration. The SBFD UE may determine valid RACH occasions among the RACH occasions. At this time, the valid RACH occasions may be determined using the method of the SBFD UE. The SBFD UE may transmit a PRACH preamble in one of the valid RACH occasions of the first PRACH configuration and the valid RACH occasions of the second PRACH configuration.

If the SBFD UE transmits the PRACH preamble in one of the valid RACH occasions determined according to the first PRACH configuration, the UE may assume that uplink transmission is not possible in the SBFD uplink resources in the case of subsequent cell access. That is, the UE may expect that Msg3 PUSCH or PUCCH of Msg4 PDSCH will not be transmitted in the SBFD uplink resources thereafter. Therefore, upon receiving the PRACH preamble in one of the valid RACH occasions determined according to the first PRACH configuration, the base station may not schedule uplink in the SBFD uplink resources.

If the SBFD UE transmits the PRACH preamble in one of the valid RACH occasions determined according to the second PRACH configuration, the UE may assume that uplink transmission is possible in the SBFD uplink resources in the case of subsequent cell access. That is, the UE may expect that Msg3 PUSCH or PUCCH of Msg4 PDSCH will be transmitted in the SBFD uplink resources thereafter. Therefore, upon receiving the PRACH preamble in one of the valid RACH occasions determined according to the second PRACH configuration, the base station may schedule uplink in the SBFD uplink resources.

The RACH occasions may be determined according to the second PRACH configuration. The SBFD UE may determine valid RACH occasions among the RACH occasions. At this time, the valid RACH occasions may be determined using the method of the SBFD UE. The SBFD UE may transmit a PRACH preamble in one RACH occasion among the valid RACH occasions.

In this case, when the SBFD UE determines the valid RACH occasion, the following may be additionally considered.

- The SBFD UE may determine that the RACH occasion included in a UL symbol of the TDD UL-DL configuration is invalid. That is, a region including the UL symbol is determined to be not the SBFD uplink resource, and it can be assumed that there is no valid RACH occasion for the SBFD UE in the region.
- The SBFD UE may determine that the RACH occasion of a slot in which the TDD UE determines a valid RACH occasion is invalid. It can be assumed that the valid RACH occasion of the SBFD UE and the valid RACH occasion of the TDD UE do not overlap in one slot.

In the above-described third-first or third-second embodiment, the UE receives different PRACH configurations and transmits a PRACH of one PRACH configuration. In this case, the UE may fail to transmit the PRACH, and PRACH retransmission may be required. For reference, if the UE fails to receive a PDCCH for scheduling msg2 within a certain interval after transmitting the PRACH, it may determine that the PRACH transmission has failed. For retransmission, the UE may use the following method.

In the first method, the UE may retransmit a PRACH preamble included in the previously transmitted PRACH configuration. At this time, the PRACH preamble may be retransmitted with new transmission power. This new transmission power may be a certain level higher than the previous transmission power. The UE may transmit a PRACH preamble of a PRACH configuration other than the previously transmitted PRACH configuration. Even in this case, the UE may perform transmission by increasing the transmission power by a certain level compared to the transmission power of the previously transmitted PRACH preamble. That is, the UE may determine the power for transmission without distinction between different PRACH configurations.

In the second method, the UE may retransmit a PRACH preamble included in the previously transmitted PRACH configuration. At this time, the PRACH preamble may be retransmitted with new transmission power. This new transmission power may be a certain level higher than the previous transmission power. The UE may transmit a PRACH preamble of a PRACH configuration other than the previously transmitted PRACH configuration. In this case, new transmission power may be determined regardless of the transmission power of the previously transmitted PRACH preamble. That is, different transmission powers may be used for the respective PRACH configurations and determined independently. In the second method, each of a plurality of PRACH configurations may have a configuration value for the transmission power of the PRACH preamble.

<Fourth Embodiment> Valid RACH occasion of SBFD uplink resource is used for PRACH repetitive transmission

In the fourth embodiment of the disclosure, the SBFD UE may assign indexes to valid RACH occasions determined to be valid in the same manner as the TDD UE. In this case, unique indexes may start from 0 and may be assigned according to a predefined rule. The predefined rule may be as follows.

- First, valid RACH occasions configured to different frequency domains at the same time may be indexed in ascending order of frequency.
- Then, valid RACH occasions configured to different times may be indexed in ascending order of time.

The SBFD UE may assign one of the previously assigned unique indexes to a valid RACH occasion that is determined to be valid by only the SBFD UE. That is, a unique index is not assigned separately to a valid RACH occasion that only the SBFD UE determines to be valid, an index of a valid RACH occasion that both the SBFD UE and the TDD UE determine to be valid may be assigned again. In addition, the SBFD UE may repeatedly transmit the same PRACH preamble in a valid RACH occasion assigned with the same index.

FIG. 18 illustrates indexes of valid RACH occasions according to the fourth embodiment.

As shown in FIG. 18, the index of a valid RACH occasion determined to be valid by only the SBFD UE may be the same as the index of a valid RACH occasion determined to be valid by both the SBFD UE and the TDD UE within the same TDD period. That is, the indexes of the valid RACH occasions in the second, third, and fourth slots may be the same as the index of the valid RACH occasion in the fifth slot. The SBFD UE may repeatedly transmit a PRACH preamble in the valid RACH occasions of the same index. That is, because the indexes of the valid RACH occasions in the second, third, fourth, and fifth slots are the same, the same PRACH preamble may be repeatedly transmitted in these four valid RACH occasions.

According to the fourth embodiment, the SBFD UE may repeatedly transmit the PRACH preamble in the SBFD configuration resources, thereby obtaining wider coverage.

<Fifth Embodiment> Non-use of PRACH resource of SBFD uplink resource before RRC connection

In the first to fifth embodiments, the SBFD UE determines the validity of the RACH occasion differently from the TDD UE. Therefore, different indexes are assigned to the same RACH occasion. As another method to solve this, the SBFD UE may determine as valid only the same valid RACH occasion as the TDD UE. That is, the SBFD UE may be configured with the SBFD uplink resource, but may not use the SBFD uplink resource to determine the validity of the RACH occasion. In other words, the SBFD UE also determines the validity of the RACH occasion using the method of the TDD cell.

If the SBFD UE is connected to the cell (i.e., in the RRC connected mode), the SBFD UE may receive a PRACH configuration through the SBFD uplink resource in order to transmit a PRACH in the SBFD uplink resource. Then, the SBFD UE may determine the validity of an RACH occasion in the SBFD uplink resource based on the PRACH configuration. A new unique index may be assigned to a valid RACH occasion.

Such unique indexes may start from 0 and may be assigned according to a predefined rule. The predefined rule may be as follows.

- First, valid RACH occasions configured to different frequency domains at the same time may be indexed in ascending order of frequency.
- Then, valid RACH occasions configured to different times may be indexed in ascending order of time.

The UE may transmit a valid RACH occasion on the SBFD uplink resource in a specific case. For example, the valid RACH occasion may be used for contention free PRACH transmission. Therefore, the SBFD UE may transmit one PRACH preamble of the valid RACH occasion when contention free PRACH transmission is instructed (e.g., PDCCH order).

FIG. 19 is a diagram illustrating the structure of a UE in a wireless communication system according to an embodiment of the disclosure.

With reference to FIG. 19, the UE may include a transceiver referring to a UE receiver 1900 and a UE transmitter 1910, a memory (not shown), and a UE processor 1905 (or a UE controller or processor). Based on the above-described communication method of the UE, the UE transceiver 1900 and 1910, the memory, and the UE processor 1905 may operate. However, the elements of the UE are not limited to the above-described example. For example, the UE may include more or fewer elements than the aforementioned elements. In addition, the transceiver, the memory, and the processor may be implemented in the form of a single chip.

The transceiver may transmit/receive a signal to/from a base station. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an embodiment of the transceiver, and elements of the transceiver are not limited to the RF transmitter and the RF receiver.

In addition, the transceiver may receive a signal through a wireless channel and output the received signal to the processor, and may transmit a signal output from the processor through the wireless channel.

The memory may store programs and data required for the operation of the UE. In addition, the memory may store control information or data included in a signal transmitted and received by the UE. The memory may include a storage medium such as a ROM, a RAM, a hard disk, a CD-ROM, and a DVD, or a combination of storage media. In addition, multiple memories may exist.

In addition, the processor may control a series of processes so that the UE may operate according to the above-described embodiment. For example, the processor may control elements of the UE so as to receive DCI composed of two layers and simultaneously receive multiple PDSCHs. Multiple processors may exist, and the processor may perform an operation of controlling the elements of the UE by executing programs stored in the memory.

FIG. 20 is a diagram illustrating the structure of a base station in a wireless communication system according to an embodiment of the disclosure.

With reference to FIG. 20, the base station may include a transceiver referring to a base station receiver 2000 and a base station transmitter 2010, a memory (not shown), and a base station processor 2005 (or a base station controller or processor). Based on the above-described communication method of the base station, the base station transceiver 2000 and 2010, the memory, and the base station processor 2005 may operate. However, the elements of the base station are not limited to the above-described example. For example, the base station may include more or fewer elements than the aforementioned elements. In addition, the transceiver, the memory, and the processor may be implemented in the form of a single chip.

The transceiver may transmit/receive a signal to/from a UE. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an embodiment of the transceiver, and elements of the transceiver are not limited to the RF transmitter and the RF receiver.

In addition, the transceiver may receive a signal through a wireless channel and output the signal to the processor, and may transmit the signal output from the processor through the wireless channel.

The memory may store programs and data necessary for the operation of the base station. In addition, the memory may store control information or data included in a signal transmitted and received by the base station. The memory may include a storage medium such as a ROM, a RAM, a hard disk, a CD-ROM, and a DVD, or a combination of storage media. In addition, multiple memories may exist.

The processor may control a series of processes so that the base station may operate according to the above-described embodiment. For example, the processor may control elements of the base station so as to compose DCI of two layers including allocation information regarding multiple PDSCHs and transmit the configured DCI. Multiple processors may exist, and the processor may perform an operation of controlling the elements of the base station by executing programs stored in the memory.

The methods according to embodiments described herein may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments described herein are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Further, the above respective embodiments may be employed in combination, as necessary. For example, one embodiment of the disclosure may be partially combined with another embodiment to operate a base station and a terminal. For example, the first and embodiments of the disclosure may be partially combined to operate a base station and a terminal. Further, although the above embodiments have been described by way of the FDD LTE system, other variants based on the technical idea of the embodiments may be implemented in other systems such as TDD LTE and 5G or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

Furthermore, in methods of the disclosure, some or all of the contents of each embodiment may be implemented in combination without departing from the essential spirit and scope of the disclosure.

Various embodiments of the disclosure have been described. The above description of the disclosure is merely for the purpose of illustration, and is not intended to limit embodiments of the disclosure to the embodiments set forth herein. Those skilled in the art will appreciate that other specific modifications and changes may be easily made thereto without changing the technical idea or essential features of the disclosure. The scope of the disclosure should be determined not by the above description but by the appended claims, and all changes and modifications derived from the meaning and scope of the claims and equivalent concepts thereof shall be construed as falling within the scope of the disclosure.

## Claims

**1.** A method of a terminal supporting a subband non-overlapping full duplex (SBFD) in a wireless communication system, the method comprising:

receiving time duplex division (TDD) resource configuration information and SBFD resource configuration information from a base station;
determining respective indexes for first random access channel (RACH) occasions that are commonly valid in the TDD resource configuration information and the SBFD resource configuration information; and
determining respective indexes for second RACH occasions that are not valid in the TDD resource configuration information and are valid in the SBFD resource configuration information,
wherein the TDD resource configuration information includes format information of each slot, and the SBFD resource configuration information includes information about an uplink subband.

**2.** The method of claim 1, wherein determining the indexes for the second RACH occasions is to assign indexes other than the indexes assigned to the first RACH occasions to the second RACH occasions.

**3.** The method of claim 1, wherein determining the indexes for the second RACH occasions is to sequentially assign indexes to valid RACH occasions in the SBFD resource configuration information based on time order, and not to use indexes to be assigned to the first RACH occasions.

**4.** The method of claim 1, further comprising:
determining an RACH occasion included in an uplink (UL) symbol indicated by the TDD resource configuration information as an invalid RACH occasion.

**5.** The method of claim 1, further comprising:

determining an RACH occasion within a slot including a valid RACH occasion determined by the TDD resource configuration information as an invalid RACH occasion.

**6.** The method of claim 1, wherein when a physical random access channel (PRACH) preamble is transmitted in an RACH occasion determined by the TDD resource configuration information, message 3 (Msg3) is configured not to be transmitted in an uplink (UL) subband indicated by the SBFD resource configuration information, and
when a PRACH preamble is transmitted in an RACH occasion of the UL subband indicated by the SBFD resource configuration information, message 3 is configured to be allowed to be transmitted in the UL subband.

**7.** The method of claim 1, wherein determining the indexes for the second RACH occasions is to sequentially assign indexes to valid RACH occasions in the SBFD resource configuration information based on time order, and to skip indexes to be assigned to the first RACH occasions so as to assign indexes to RACH occasions that are later in time.

**8.** The method of claim 1, wherein determining the indexes for the second RACH occasions is to assign an index for the second RACH occasions within a TDD period equally to an index assigned to the first RACH occasions within the TDD period, based on the TDD resource configuration information.

**9.** The method of claim 1, further comprising:
transmitting a physical random access channel (PRACH) preamble only in the second RACH occasions, excluding the first RACH occasions.

**10.** A terminal supporting a subband non-overlapping full duplex (SBFD) operating in a wireless communication system, the terminal comprising:

a transceiver; and
a controller configured to:

receive time duplex division (TDD) resource configuration information and SBFD resource configuration information from a base station,
determine respective indexes for first random access channel (RACH) occasions that are commonly valid in the TDD resource configuration information and the SBFD resource configuration information, and
determine respective indexes for second RACH occasions that are not valid in the TDD resource configuration information and are valid in the SBFD resource configuration information,
wherein the TDD resource configuration information includes format information of each slot, and the SBFD resource configuration information includes information about an uplink subband.

**11.** The terminal of claim 10, wherein in determining the indexes for the second RACH occasions, the controller assigns indexes other than the indexes assigned to the first RACH occasions to the second RACH occasions.

**12.** The terminal of claim 10, wherein in determining the indexes for the second RACH occasions, the controller sequentially assigns indexes to valid RACH occasions in the SBFD resource configuration information based on time order, and does not use indexes to be assigned to the first RACH occasions.

**13.** The terminal of claim 10, wherein in determining the indexes for the second RACH occasions, the controller sequentially assigns indexes to valid RACH occasions in the SBFD resource configuration information based on time order, and skips indexes to be assigned to the first RACH occasions so as to assign indexes to RACH occasions that are later in time.

**14.** The terminal of claim 10, wherein in determining the indexes for the second RACH occasions, the controller assigns an index for the second RACH occasions within a TDD period equally to an index assigned to the first RACH occasions within the TDD period, based on the TDD resource configuration information.

**15.** The terminal of claim 10, wherein the controller is further configured to transmit a physical random access channel (PRACH) preamble only in the second RACH occasions, excluding the first RACH occasions.

FIG. 1

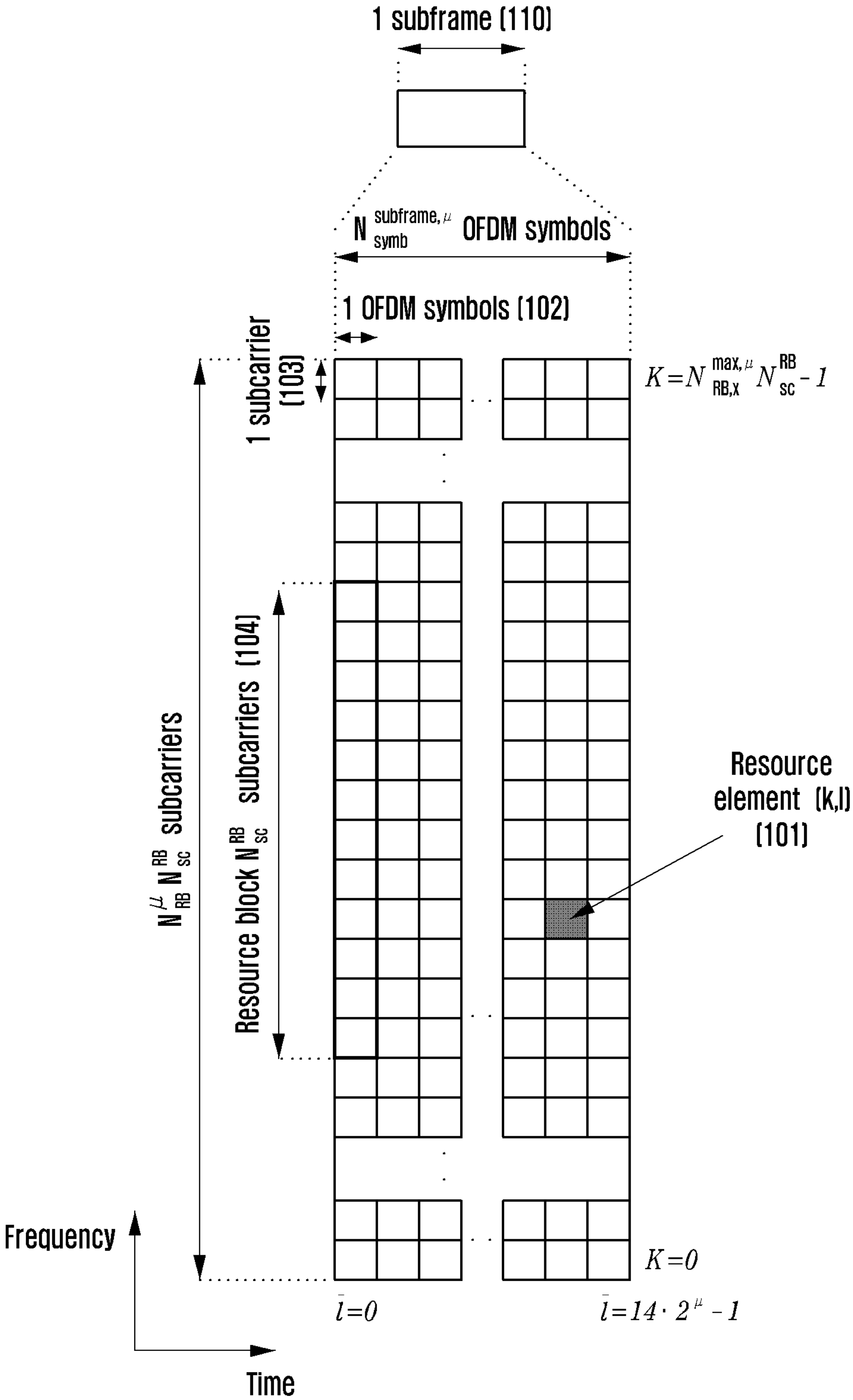

1 subframe (110)
N subframe,μ symb OFDM symbols
1 OFDM symbols (102)
1 subcarrier (103)
K=N max,μ RB,x N RB sc -1
Resource block N RB sc subcarriers (104)
N μ RB N RB sc subcarriers
Resource element (k,l) (101)
Frequency
K=0
l=0
l=14·2μ-1
Time

FIG. 2

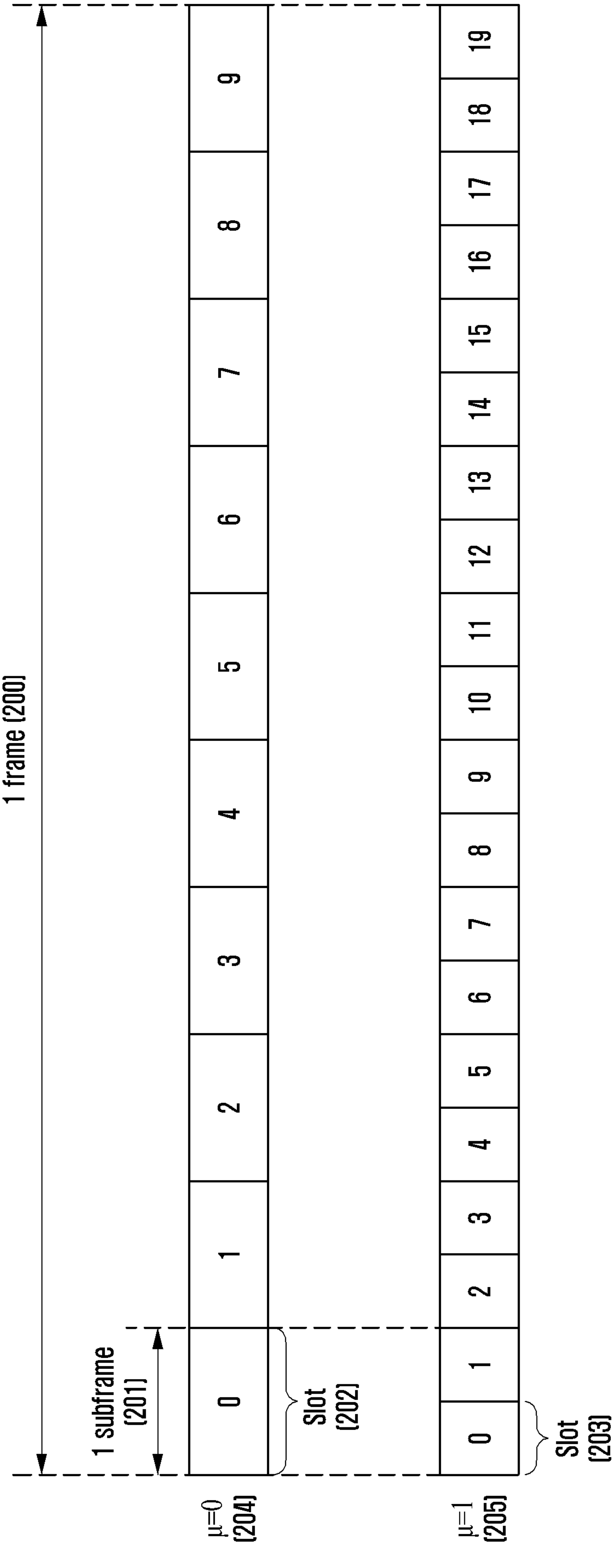
1 frame (200)
1 subframe (201)
Slot (202)
Slot (203)
μ=0 (204)
μ=1 (205)
0 1 2 3 4 5 6 7 8 9
0 1 2 3 4 5 6 7 8 9 10 11 12 13 14 15 16 17 18 19

FIG. 3

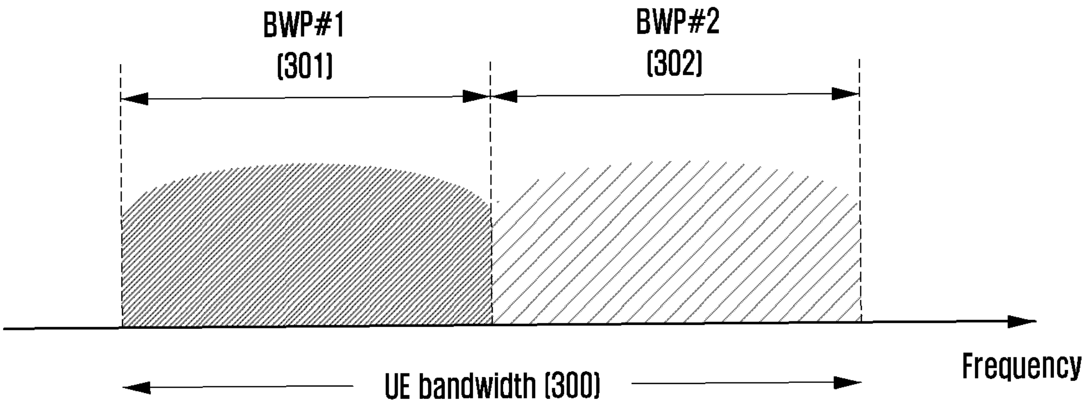

FIG. 4

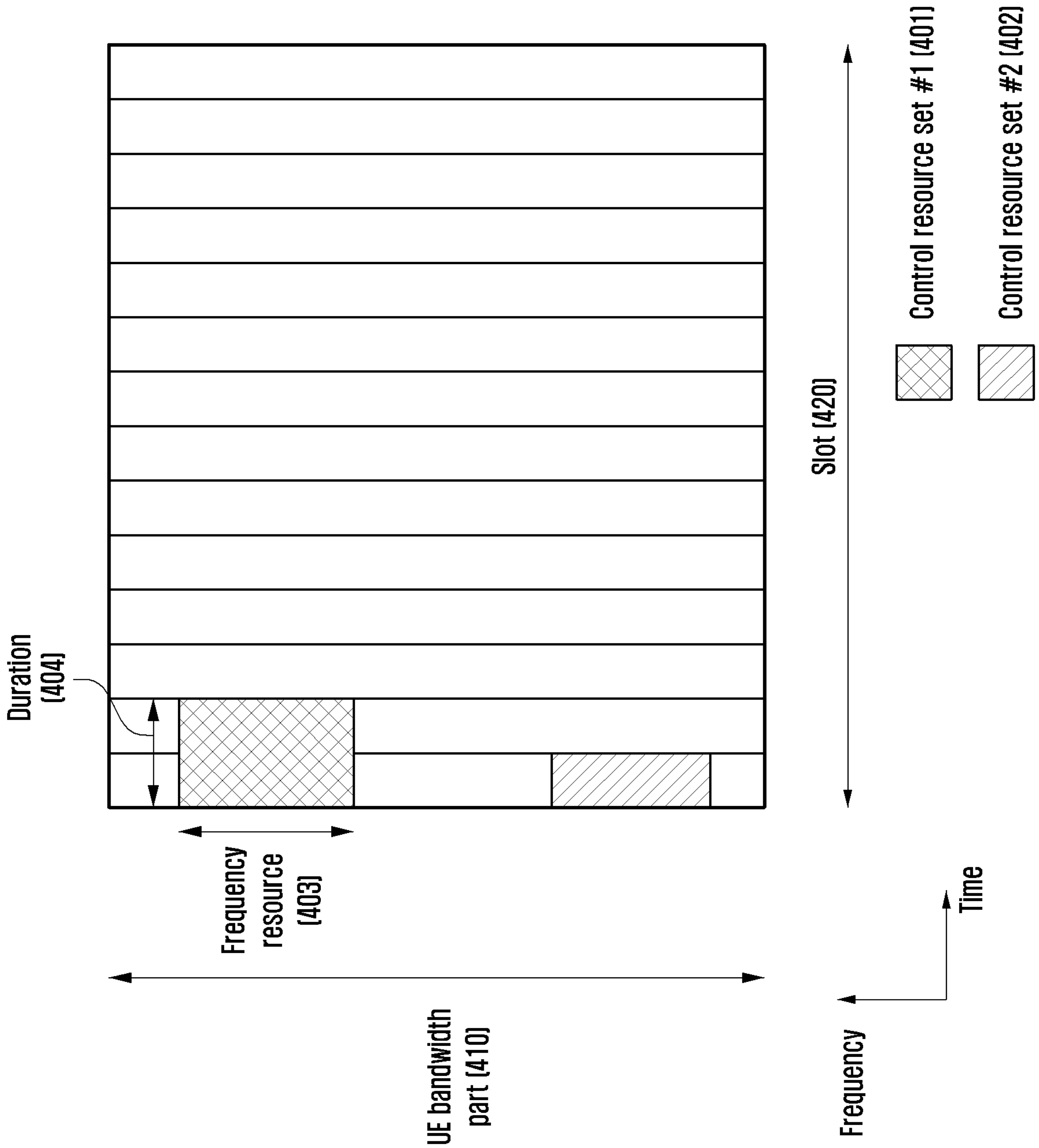
Duration (404)
Frequency resource (403)
UE bandwidth part (410)
Slot (420)
Control resource set #1 (401)
Control resource set #2 (402)
Time
Frequency

FIG. 5

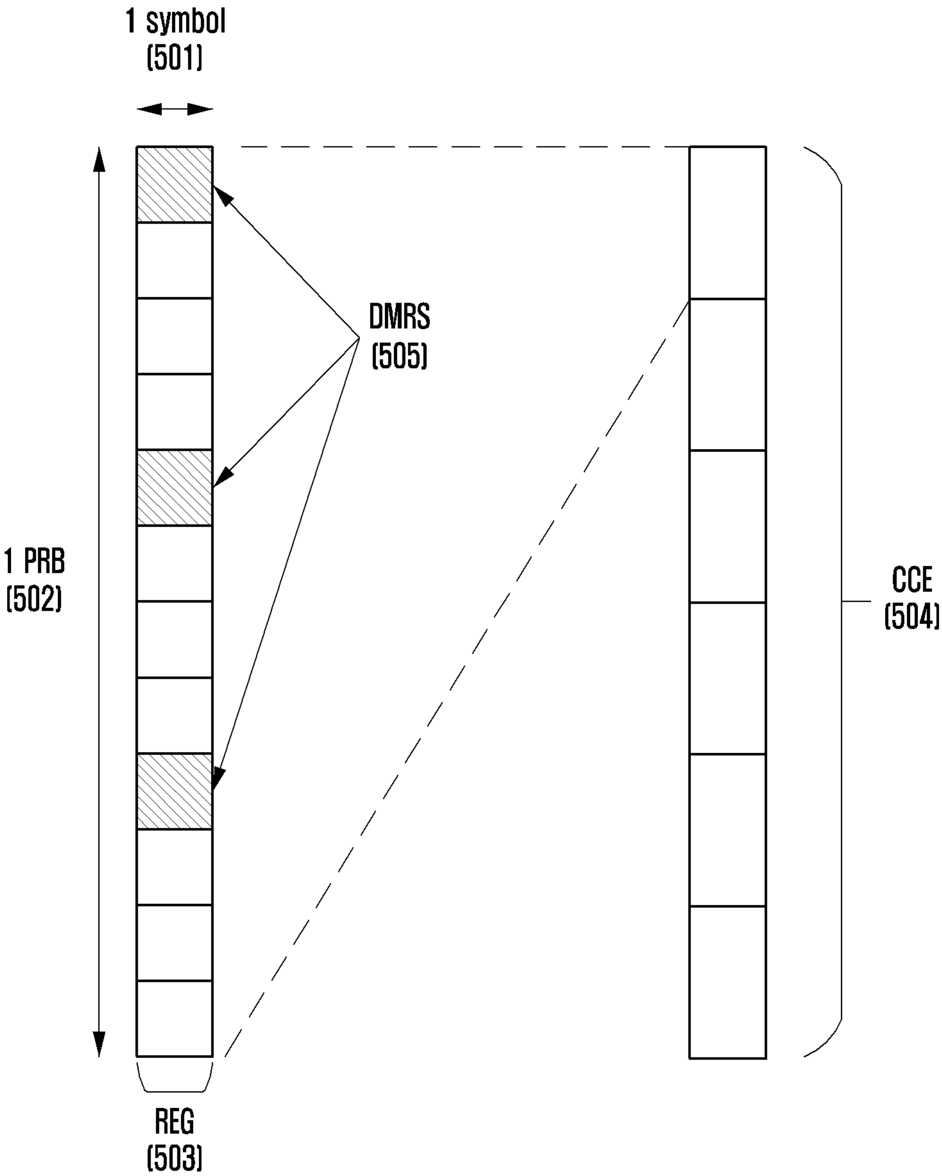

FIG. 6

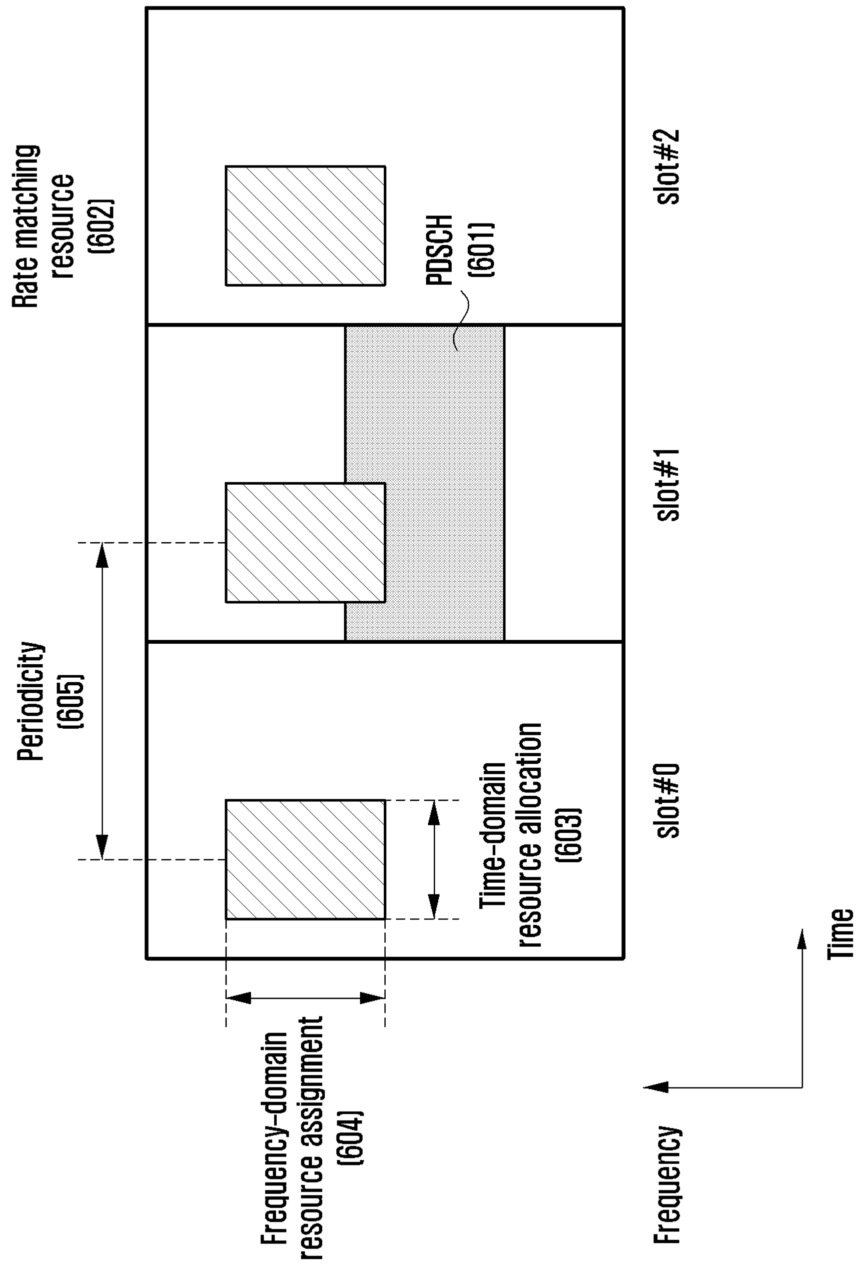

Rate matching resource (602)
PDSCH (601)
Periodicity (605)
Time-domain resource allocation (603)
Frequency-domain resource assignment (604)
slot#0
slot#1
slot#2
Frequency
Time

FIG. 7

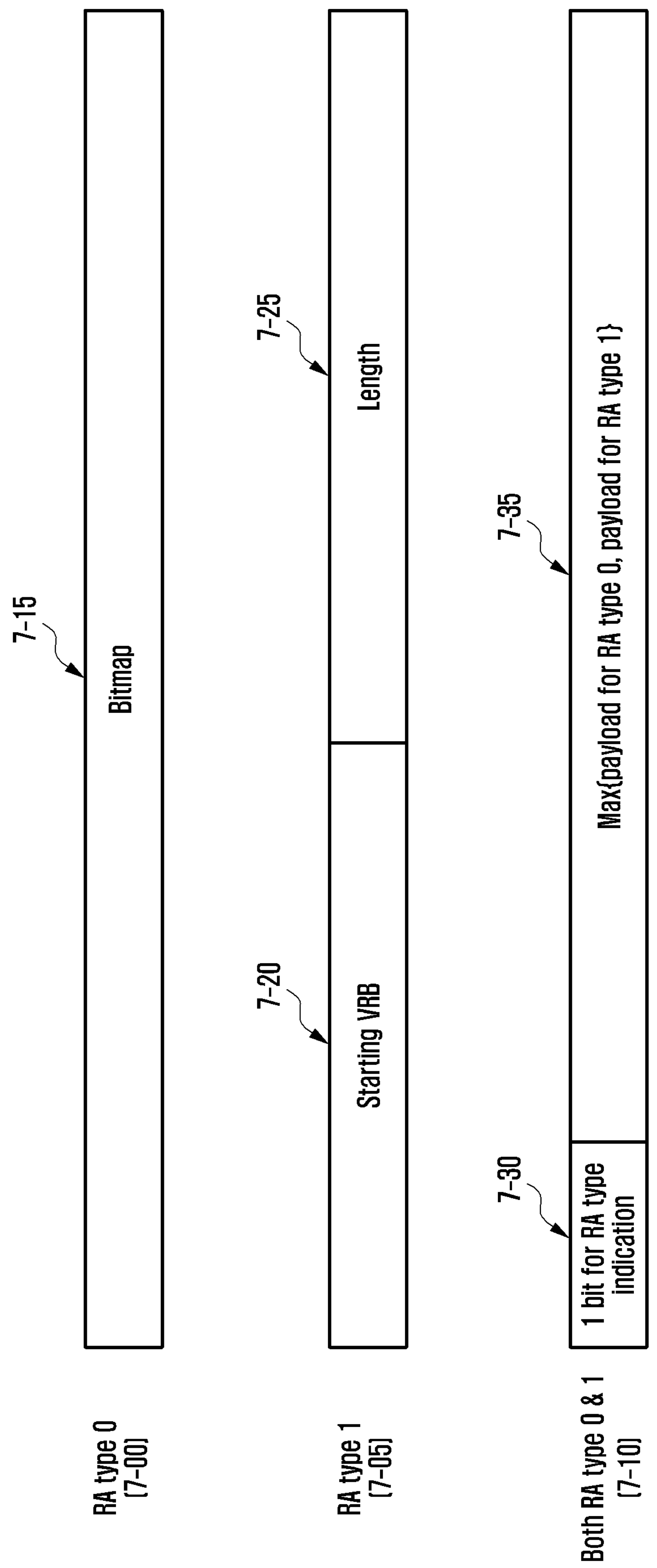

RA type 0
(7-00)
Bitmap
7-15
RA type 1
(7-05)
Starting VRB
7-20
Length
7-25
Both RA type 0 & 1
(7-10)
1 bit for RA type indication
7-30
Max{payload for RA type 0, payload for RA type 1}
7-35

FIG. 8

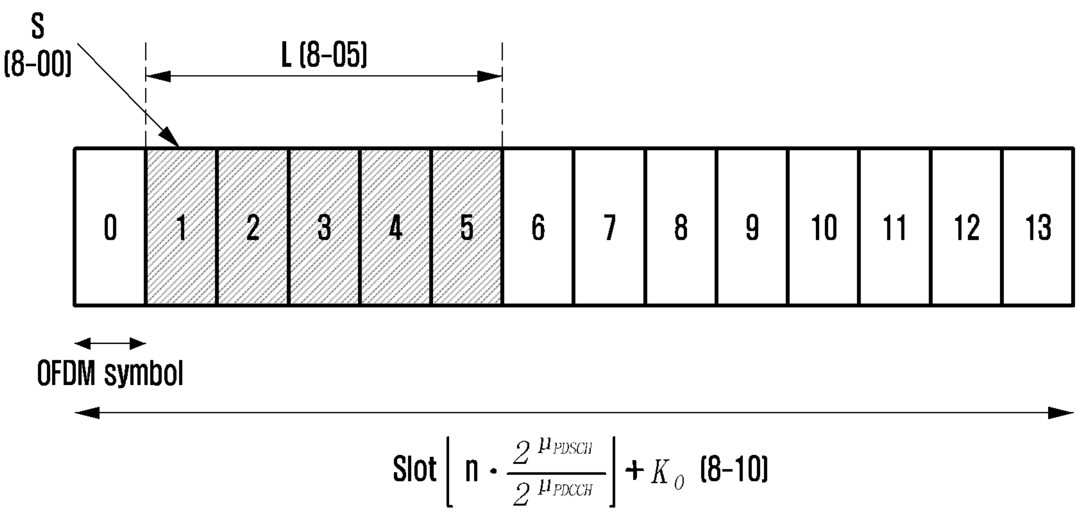
S
(8-00)
L (8-05)
0
1
2
3
4
5
6
7
8
9
10
11
12
13
OFDM symbol
Slot $\left\lfloor n \cdot \frac{2^{\mu_{PDSCH}}}{2^{\mu_{PDCCH}}} \right\rfloor + K_0$ (8-10)

FIG. 9

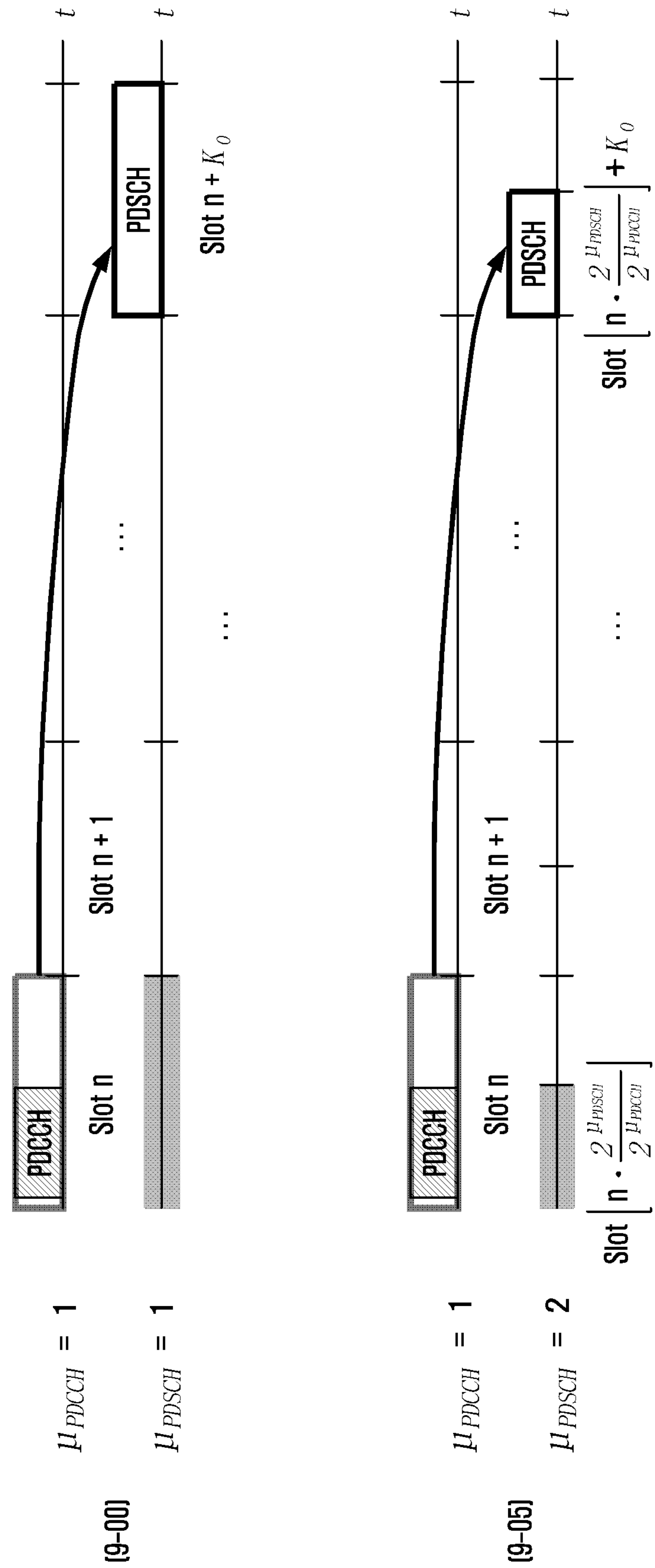
(9-00)
$\mu_{PDCCH}$ = 1
$\mu_{PDSCH}$ = 1
PDCCH
Slot n
Slot n + 1
PDSCH
Slot n + $K_0$
t
t
(9-05)
$\mu_{PDCCH}$ = 1
$\mu_{PDSCH}$ = 2
PDCCH
Slot n
Slot n + 1
PDSCH
Slot $\left\lfloor n \cdot \frac{2^{\mu_{PDSCH}}}{2^{\mu_{PDCCH}}} \right\rfloor$
Slot $\left\lfloor n \cdot \frac{2^{\mu_{PDSCH}}}{2^{\mu_{PDCCH}}} \right\rfloor + K_0$
t
t

FIG. 10

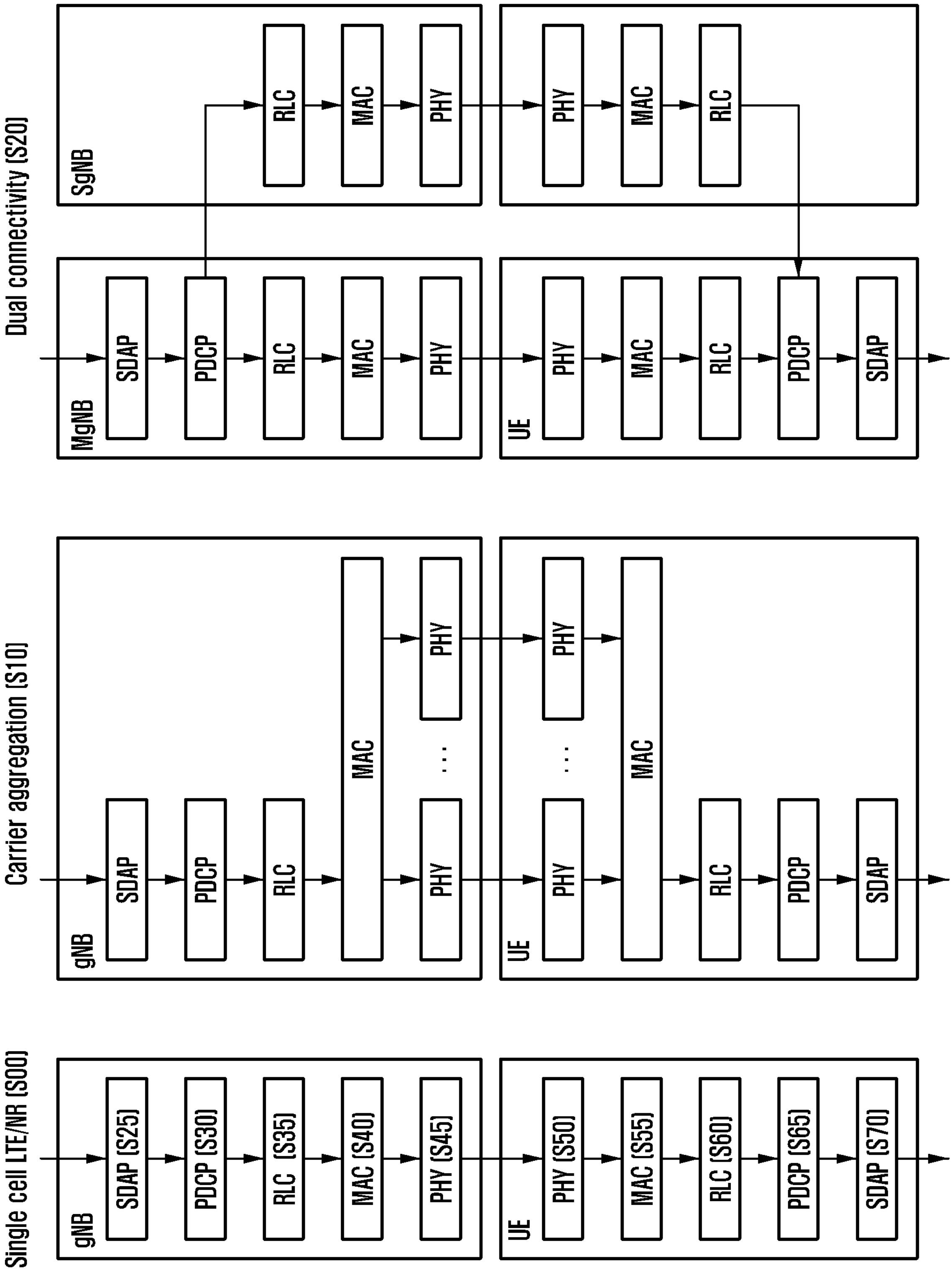
Dual connectivity (S20)
MgNB
SDAP
PDCP
RLC
MAC
PHY
SgNB
RLC
MAC
PHY
UE
PHY
MAC
RLC
PDCP
SDAP
PHY
MAC
RLC
Carrier aggregation (S10)
gNB
SDAP
PDCP
RLC
MAC
PHY
...
PHY
UE
PHY
...
PHY
MAC
RLC
PDCP
SDAP
Single cell LTE/NR (S00)
gNB
SDAP (S25)
PDCP (S30)
RLC (S35)
MAC (S40)
PHY (S45)
UE
PHY (S50)
MAC (S55)
RLC (S60)
PDCP (S65)
SDAP (S70)

FIG. 11

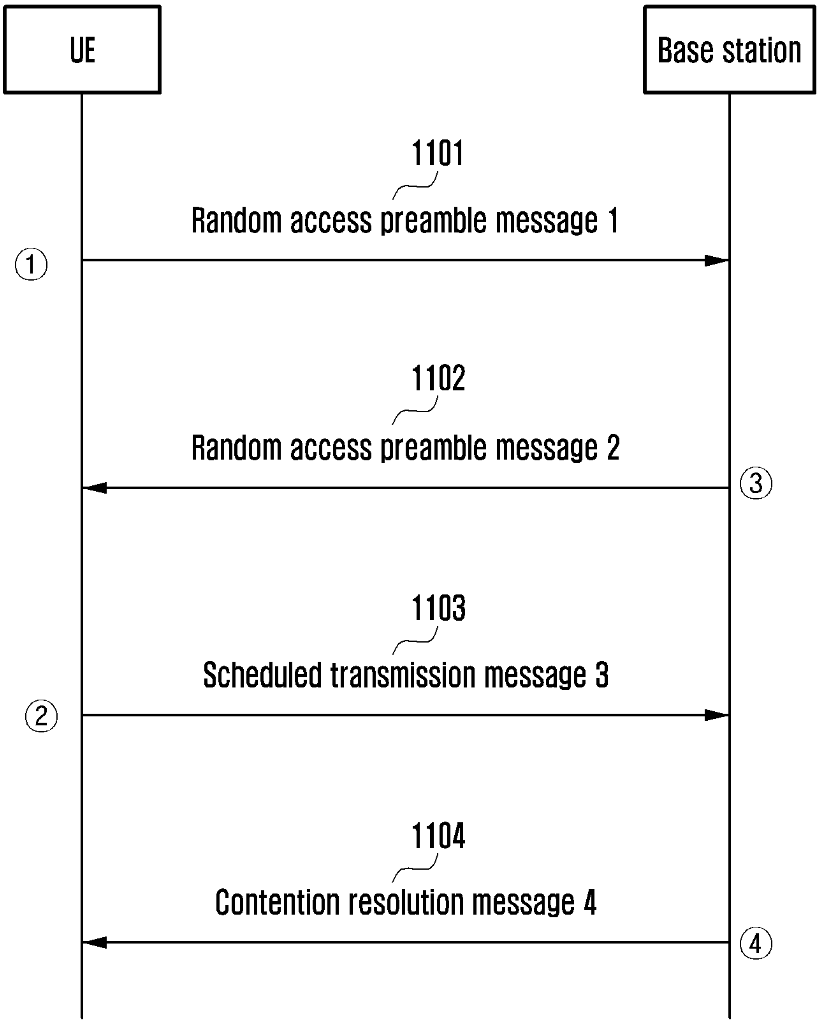
UE
Base station
1101
Random access preamble message 1
①
1102
Random access preamble message 2
③
1103
Scheduled transmission message 3
②
1104
Contention resolution message 4
④

FIG. 12

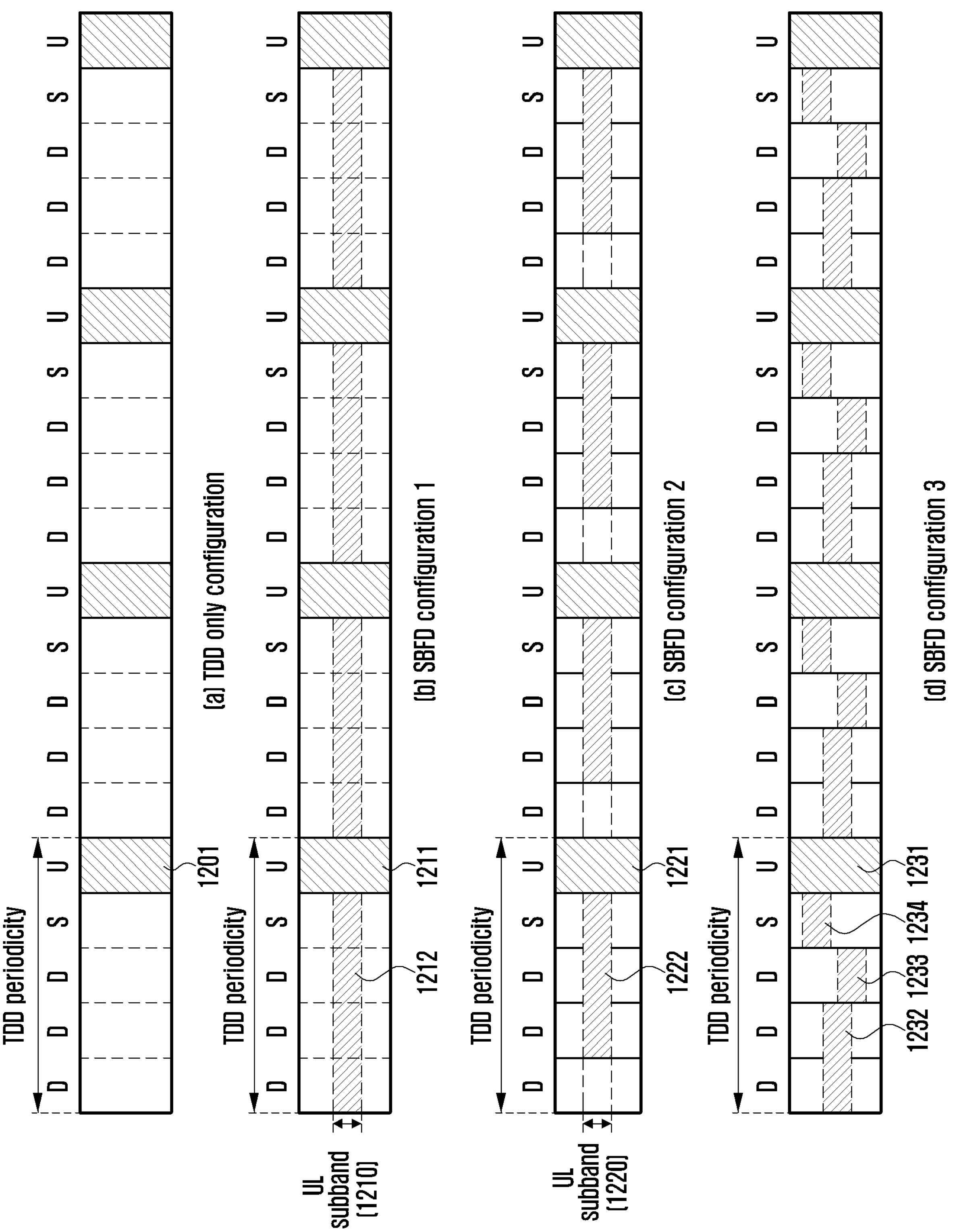
TDD periodicity
D D D S U D D D S U D D D S U D D D S U
1201
(a) TDD only configuration
UL subband (1210)
1212
1211
(b) SBFD configuration 1
UL subband (1220)
1222
1221
(c) SBFD configuration 2
1232 1233 1234 1231
(d) SBFD configuration 3

FIG. 13

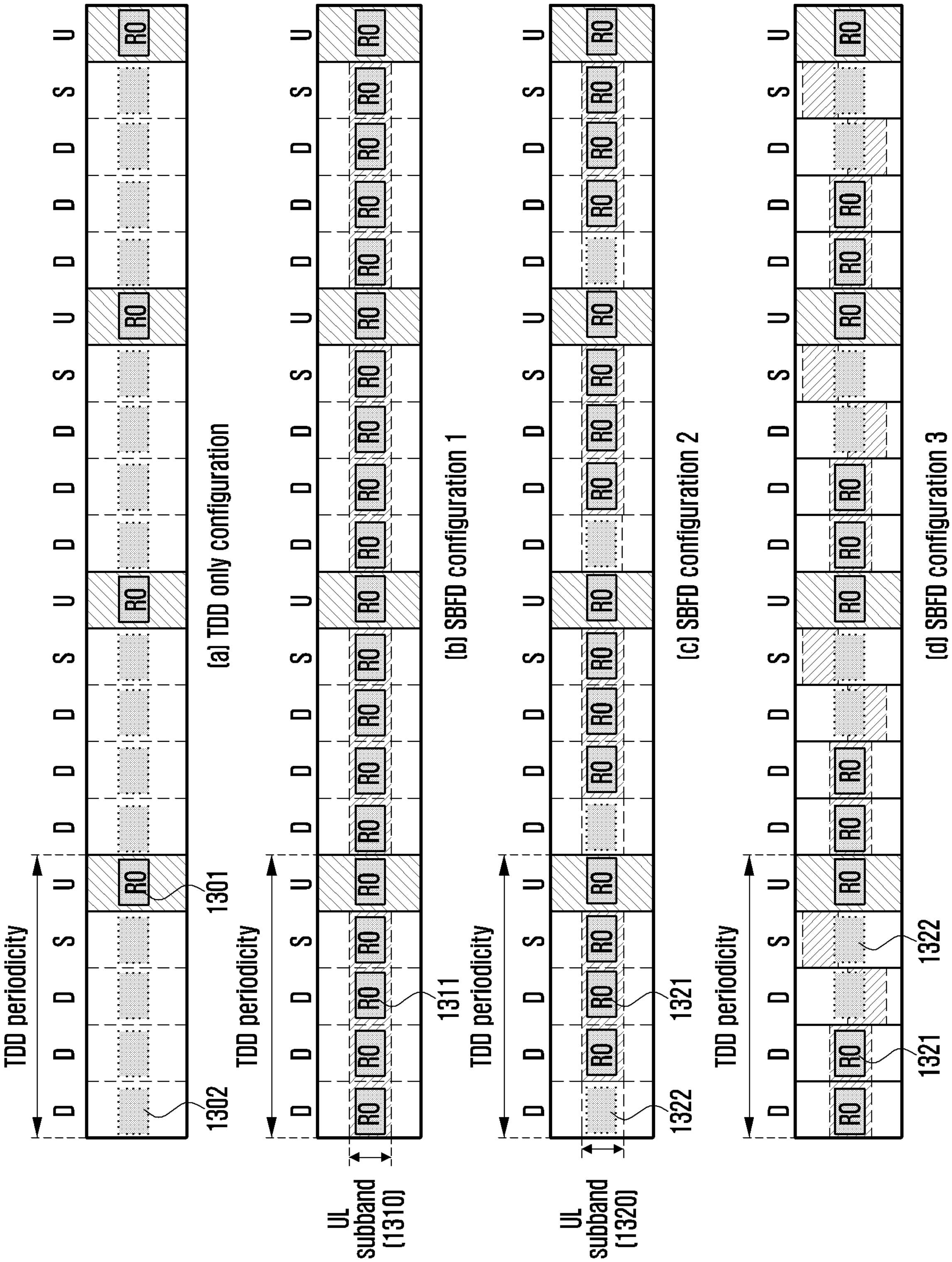
TDD periodicity
D D D S U D D D D S U D D D D S U D D D D S U
RO
1301
1302
(a) TDD only configuration
UL subband (1310)
1311
(b) SBFD configuration 1
UL subband (1320)
1321
1322
(c) SBFD configuration 2
(d) SBFD configuration 3

FIG. 14

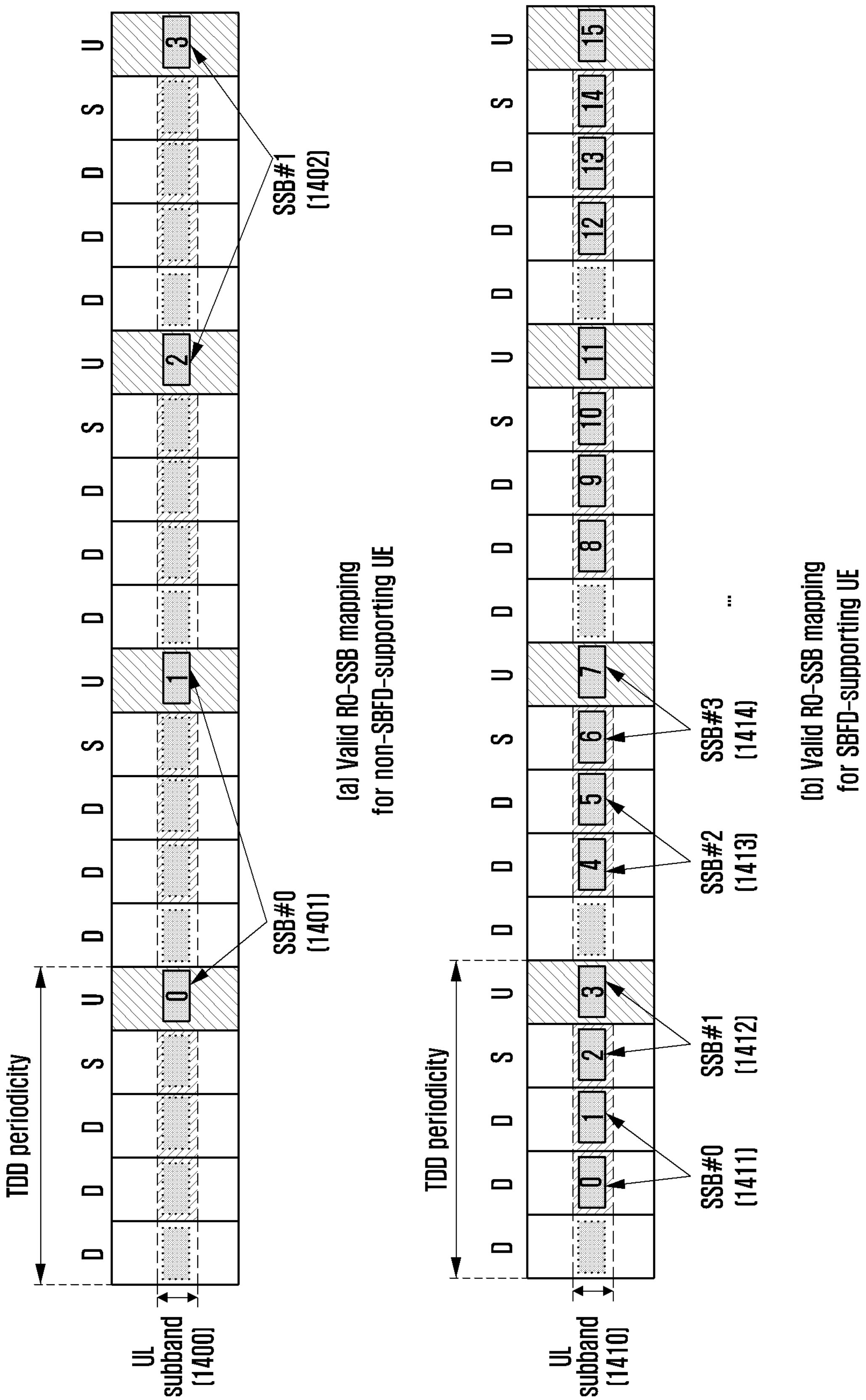
TDD periodicity
D D D S U D D D D S U D D D D S U
UL subband (1400)
SSB#0 (1401)
SSB#1 (1402)
0
1
2
3
(a) Valid RO-SSB mapping for non-SBFD-supporting UE
TDD periodicity
D D D S U D D D D S U D D D D S U
UL subband (1410)
SSB#0 (1411)
SSB#1 (1412)
SSB#2 (1413)
SSB#3 (1414)
0 1 2 3 4 5 6 7 8 9 10 11 12 13 14 15
...
(b) Valid RO-SSB mapping for SBFD-supporting UE

FIG. 15

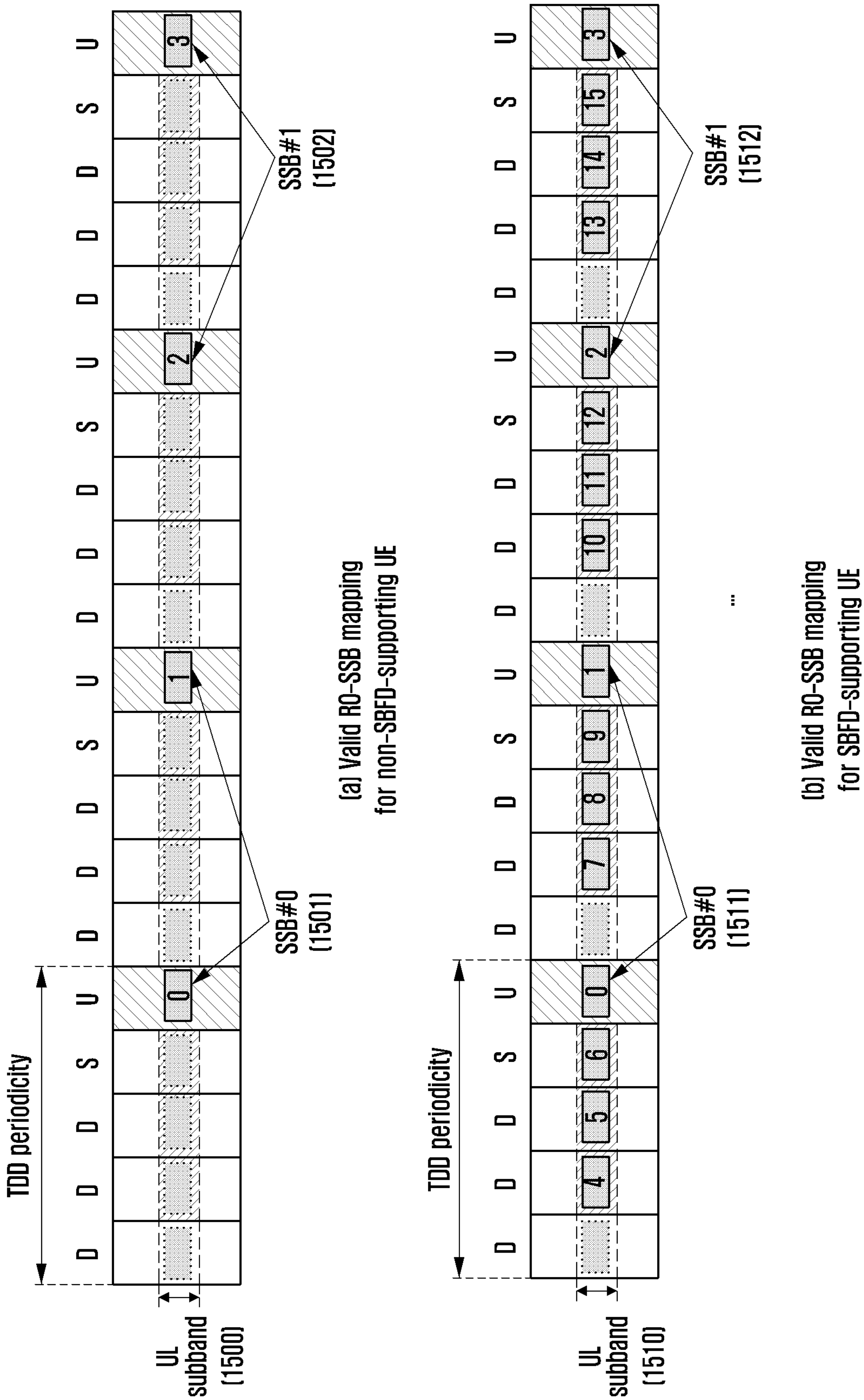
TDD periodicity
D D D S U D D D D S U D D D D S U D D D D S U
UL subband (1500)
0
1
2
3
SSB#0 (1501)
SSB#1 (1502)
(a) Valid RO-SSB mapping for non-SBFD-supporting UE
UL subband (1510)
4
5
6
7
8
9
10
11
12
13
14
15
SSB#0 (1511)
SSB#1 (1512)
...
(b) Valid RO-SSB mapping for SBFD-supporting UE

FIG. 16

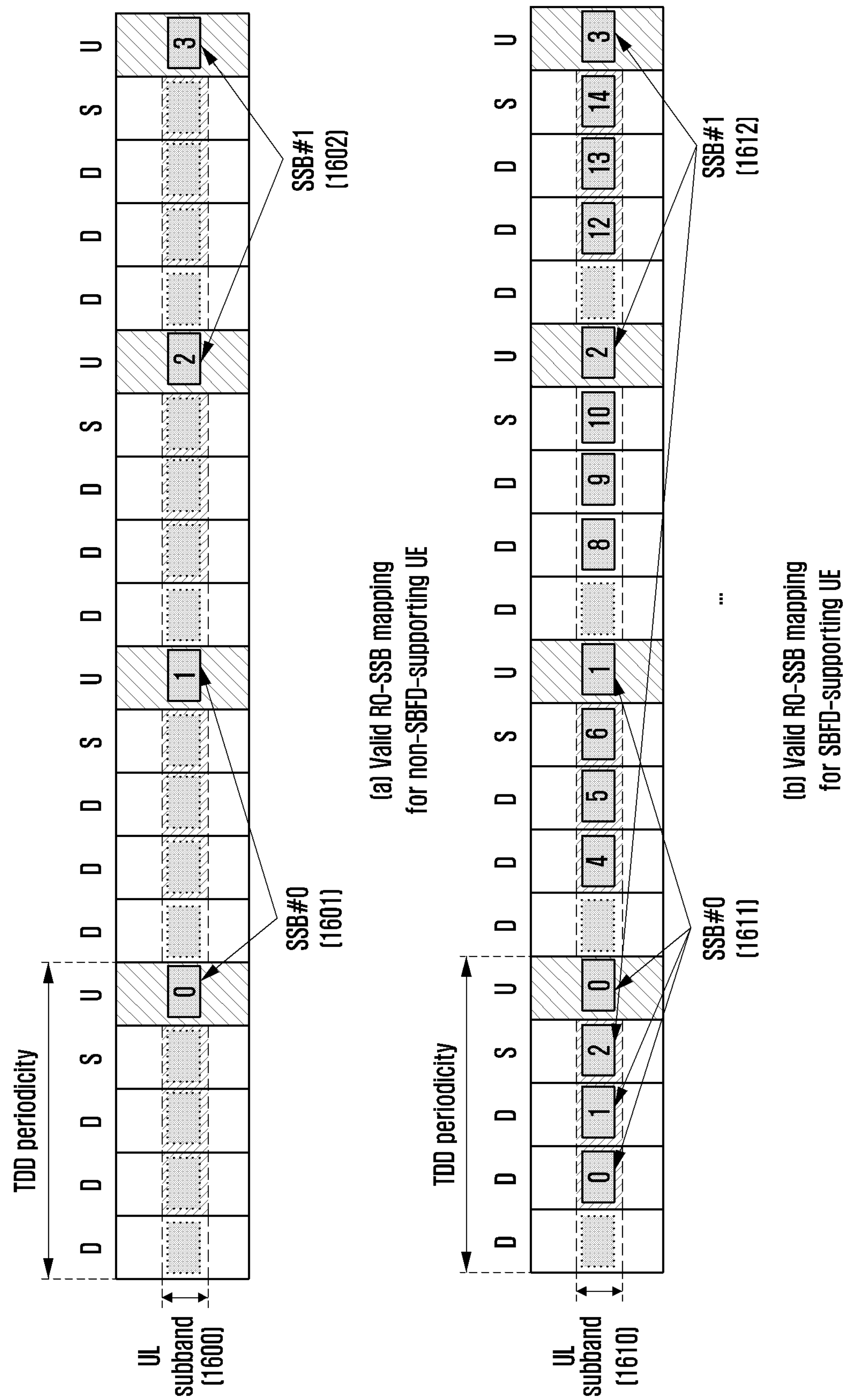
TDD periodicity
D D D D S U D D D S U D D D S U D D D S U
UL subband (1600)
SSB#0 (1601)
SSB#1 (1602)
(a) Valid RO-SSB mapping for non-SBFD-supporting UE
TDD periodicity
D D D D S U D D D S U D D D S U D D D S U
UL subband (1610)
SSB#0 (1611)
SSB#1 (1612)
...
(b) Valid RO-SSB mapping for SBFD-supporting UE

FIG. 17

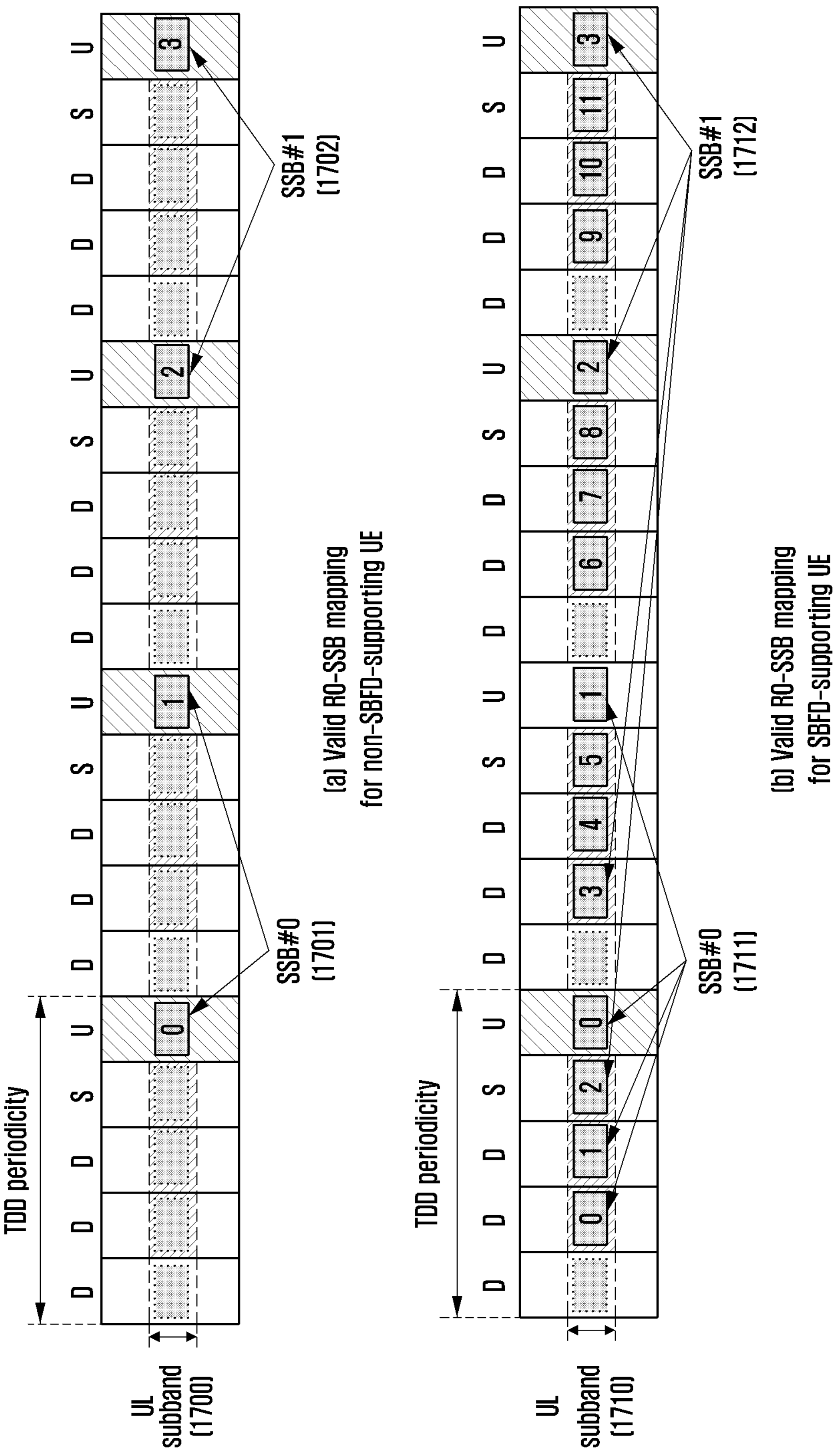
TDD periodicity
UL subband (1700)
D D D S U D D D D S U D D D D S U D D D D S U
0 1 2 3
SSB#0 (1701)
SSB#1 (1702)
(a) Valid RO-SSB mapping for non-SBFD-supporting UE
TDD periodicity
UL subband (1710)
D D D S U D D D D S U D D D D S U D D D D S U
0 1 2 0 3 4 5 1 6 7 8 2 9 10 11 3
SSB#0 (1711)
SSB#1 (1712)
(b) Valid RO-SSB mapping for SBFD-supporting UE

FIG. 18

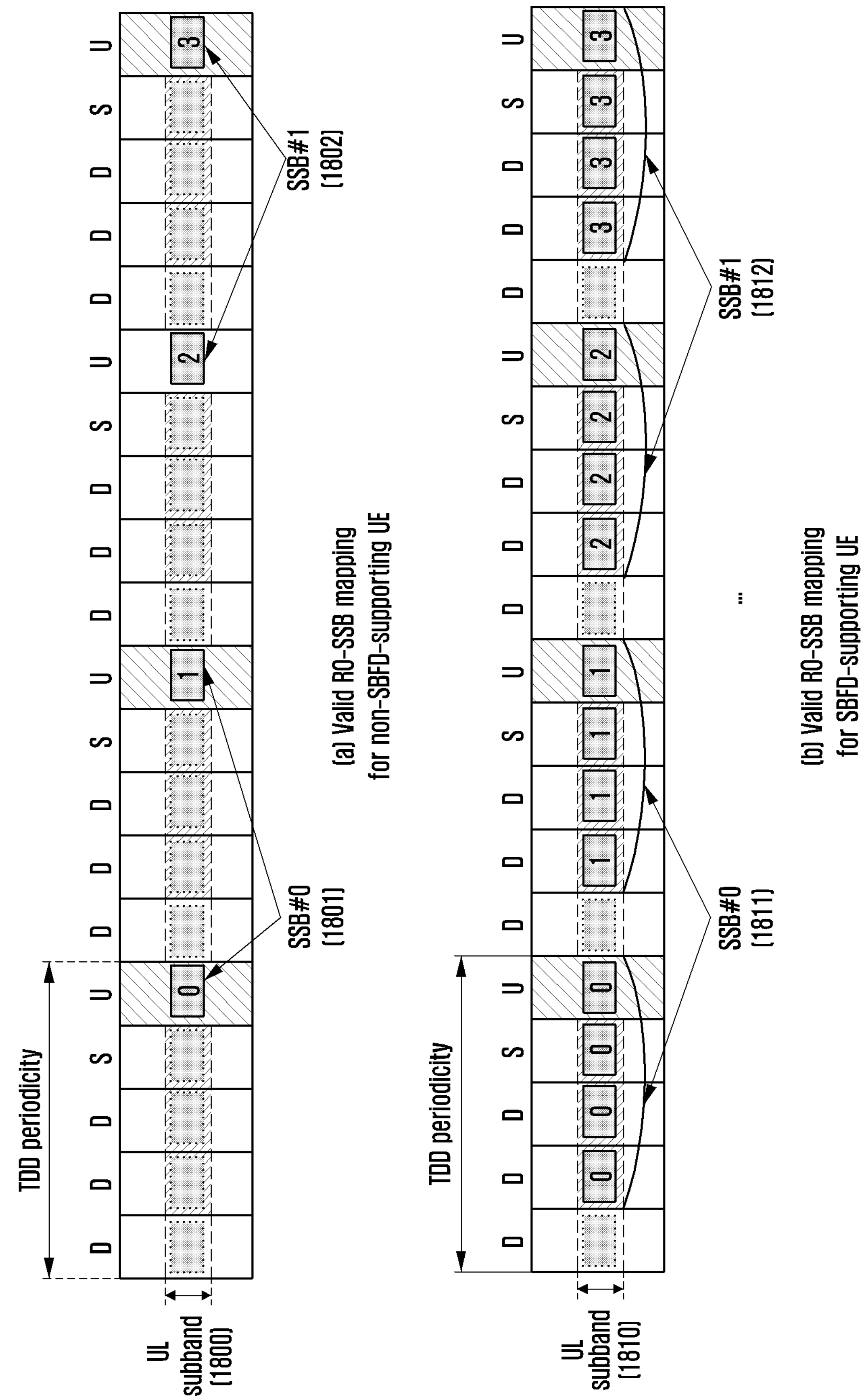

TDD periodicity
D D D S U D D D D S U D D D D S U D D D D S U
UL subband (1800)
SSB#0 (1801)
SSB#1 (1802)
(a) Valid RO-SSB mapping for non-SBFD-supporting UE
UL subband (1810)
SSB#0 (1811)
SSB#1 (1812)
...
(b) Valid RO-SSB mapping for SBFD-supporting UE

FIG. 19

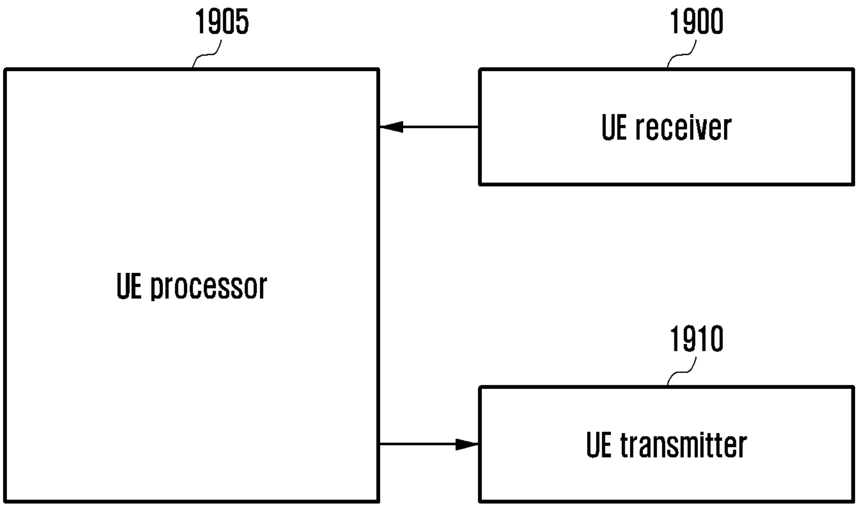

FIG. 20

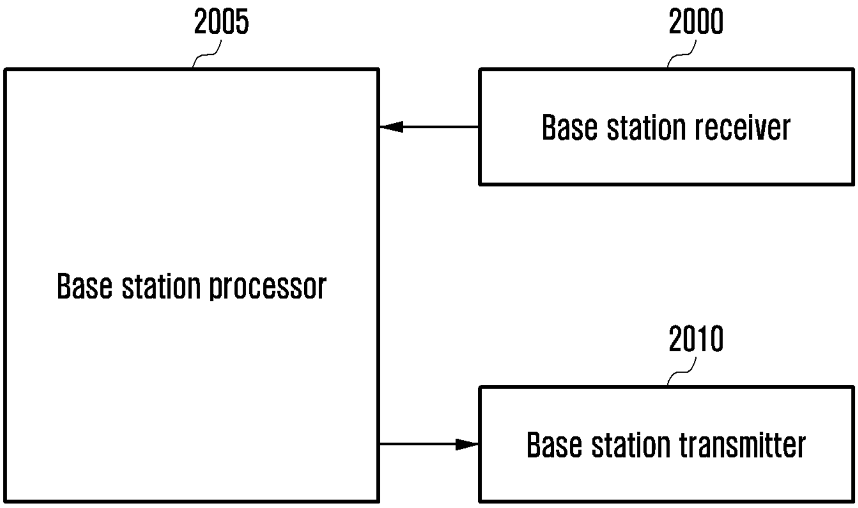
2005
2000
Base station receiver
Base station processor
2010
Base station transmitter

**INTERNATIONAL SEARCH REPORT**

International application No.
**PCT/KR2023/005755**

**A. CLASSIFICATION OF SUBJECT MATTER**

**H04W 74/08**(2009.01)i; **H04W 74/00**(2009.01)i

According to International Patent Classification (IPC) or to both national classification and IPC

**B. FIELDS SEARCHED**

Minimum documentation searched (classification system followed by classification symbols)

H04W 74/08(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SBFD (subband non-overlapping full duplex), TDD, 유효한 랜덤 액세스 채널 기회 (valid RACH occasion), 공통 자원 인덱스 (common resource index)

**C. DOCUMENTS CONSIDERED TO BE RELEVANT**

| Category* | Citation of document, with indication, where appropriate, of the relevant passages | Relevant to claim No. |
|---|---|---|
| A | CMCC. Revised SID: Study on evolution of NR duplex operation. RP-220633, 3GPP TSG RAN Meeting #95-e, Electronic Meeting. 11 March 2022. See sections 3 and 4.1. | 1-15 |
| A | WO 2022-057835 A1 (QUALCOMM INCORPORATED et al.) 24 March 2022 (2022-03-24) See paragraphs [0005] and [0079]. | 1-15 |
| A | CMCC (MODERATOR). Moderator's summary for discussion [94e-04-R18-Duplex]. RP-213484, 3GPP TSG RAN Meeting #94-e, Electronic Meeting. 10 December 2021. See sections 1.1-1.4. | 1-15 |
| A | CENC. Discussion on sub band non-overlapping full duplex. R1-2204412, 3GPP TSG-RAN WG1 #109-e, e-Meeting. 24 April 2022. See sections 1-3. | 1-15 |
| A | KR 10-2022-0044937 A (LG ELECTRONICS INC.) 12 April 2022 (2022-04-12) See paragraphs [0022]-[0042]. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 July 2023** | **28 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/005755**

| Patent document cited in search report | Publication date (day/month/year) | Patent family member(s) | Publication date (day/month/year) |
|---|---|---|---|
| WO 2022-057835 A1 | 24 March 2022 | BR 112023003965 A2 | 11 April 2023 |
| | | CN 116097863 A | 09 May 2023 |
| | | KR 10-2023-0069104 A | 18 May 2023 |
| KR 10-2022-0044937 A | 12 April 2022 | US 2022-0338264 A1 | 20 October 2022 |
| | | WO 2021-029732 A1 | 18 February 2021 |

Form PCT/ISA/210 (patent family annex) (July 2022)